(19) Europäisches Patentamt
European Patent Office
Office européen des brevets

(11) EP 4 578 216 B1

(12) EUROPEAN PATENT SPECIFICATION

(45) Date of publication and mention
of the grant of the patent:
14.01.2026 Bulletin 2026/03

(51) International Patent Classification (IPC):
H04W 24/10 (2009.01)    H04W 24/02 (2009.01)
G06N 20/00 (2019.01)

(21) Application number: 23818287.7

(22) Date of filing: 03.11.2023

(52) Cooperative Patent Classification (CPC):
H04W 24/10; G06N 20/00; H04W 24/02

(86) International application number:
PCT/CN2023/129652

(87) International publication number:
WO 2025/091477 (08.05.2025 Gazette 2025/19)

(54) **LIFE CYCLE MANAGEMENT ON MACHINE LEARNING FOR CHANNEL STATE INFORMATION FEEDBACK ENHANCEMENT**

LEBENSZYKLUSVERWALTUNG BEIM MASCHINENLERNEN ZUR VERBESSERUNG DER RÜCKKOPPLUNG VON KANALSTATUSINFORMATIONEN

GESTION DE LA DURÉE DE VIE SUR APPRENTISSAGE AUTOMATIQUE POUR AMÉLIORATION DE RÉTROACTION D'INFORMATIONS D'ÉTAT DE CANAL

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(43) Date of publication of application:
02.07.2025 Bulletin 2025/27

(73) Proprietor: GOOGLE LLC
Mountain View CA 94043 (US)

(72) Inventors:
• HUANG, Chi-Lin
Taipei City (TW)
• ZHANG, Yushu
Beijing 100190 (CN)

(74) Representative: Marks & Clerk GST
1 New York Street
Manchester M1 4HD (GB)

(56) References cited:
WO-A1-2023/187687

• SAKIRA HASSAN ET AL: "AIML control and other topics", vol. 3GPP RAN 2, no. Toulouse, FR; 20230821 - 20230825, 11 August 2023 (2023-08-11), XP052443922, Retrieved from the Internet <URL:https://www.3gpp.org/ftp/TSG_RAN/WG2_RL2/TSGR2_123/Docs/R2-2308212.zip R2-2308212 AIML control other.docx> [retrieved on 20230811]
• WANG GANG ET AL: "Discussion on general aspects of AI ML framework", vol. 3GPP RAN 1, no. Xiamen, CN; 20231009 - 20231013, 29 September 2023 (2023-09-29), XP052527004, Retrieved from the Internet <URL:https://www.3gpp.org/ftp/TSG_RAN/WG1_RL1/TSGR1_114b/Docs/R1-2309285.zip R1-2309285.docx> [retrieved on 20230929]
• YUSHU ZHANG ET AL: "On General Aspects of AI/ML Framework", vol. 3GPP RAN 1, no. Xiamen, CN; 20231009 - 20231013, 29 September 2023 (2023-09-29), XP052526978, Retrieved from the Internet <URL:https://www.3gpp.org/ftp/TSG_RAN/WG1_RL1/TSGR1_114b/Docs/R1-2309259.zip R1-2309259 On General Aspects of AIML Framework.docx> [retrieved on 20230929]

## Description

### TECHNICAL FIELD

The present disclosure relates generally to wireless communication, and more particularly, to machine learning (ML) in wireless communication.

### BACKGROUND

The Third Generation Partnership Project (3GPP) specifies a radio interface referred to as fifth generation (5G) new radio (NR) (5G NR). An architecture for a 5G NR wireless communication system includes a 5G core (5GC) network, a 5G radio access network (5G-RAN), a user equipment (5G UE), etc. The 5G NR architecture seeks to provide increased data rates, decreased latency, and/or increased capacity compared to prior generation cellular communication systems.
Wireless communication systems, in general, provide various telecommunication services (e.g., telephony, video, data, messaging, etc.) based on multiple-access technologies, such as orthogonal frequency division multiple access (OFDMA) technologies, that support communication with multiple UEs. Improvements in mobile broadband continue the progression of such wireless communication technologies. For example, ML for new radio (NR) air interface plays an important role for channel state information (CSI) feedback enhancement, beam management, and positioning accuracy enhancement.
Patent document WO2023/187687 discloses UE actions to be taken if the failure of a machine learning, ML, model is detected by an ML model life cycle management LCM. The UE signals its capability to the network NW e.g. if the UE capable of detecting ML model failure or if it can resolve problems. The ML model can be configured by the NW and the UE can be configured to monitor ML model performance and to detect ML model problems or failure situations. The UE can initiate an RRC Re-establishment procedure by RRC Reestablishment Request message that includes a cause value indicating failure of an ML model.

### BRIEF SUMMARY

The following presents a simplified summary of one or more aspects in order to provide a basic understanding of such aspects. This summary is not an extensive overview of all contemplated aspects. This summary neither identifies key or critical elements of all aspects nor delineates the scope of any or all aspects. Its sole purpose is to present some concepts of one or more aspects in a simplified form as a prelude to the more detailed description that is presented later.
ML for NR air interface plays an important role for CSI feedback enhancement, beam management, and positioning accuracy enhancement. For a configured ML functionality/model for CSI feedback enhancement, it is important for the network and the user equipment (UE) to determine whether the ML functionality/model for CSI feedback enhancement is working in a normal status or a failure status. Hence, in order to make sure the ML functionality/model for CSI feedback enhancement can work well after deployment, the UE and the network entity may have to determine how to implement an ML functionality/model life cycle management (LCM) procedure, such as for ML functionality/model monitoring. However, determining whether the ML functionality/model for CSI feedback enhancement is working in the normal status or the failure status is of increased complexity.
The present disclosure addresses the above-noted and other deficiencies by an ML functionality-based/model-identifier (ID)-based LCM procedure. In some examples, a UE may transmit UE capability signaling to a network entity indicating an ML based LCM capability for CSI feedback enhancement. The UE receives control signaling for the ML functionality-based/model-ID-based LCM configuration for CSI feedback enhancement. The UE performs ML functionality-based/model-ID-based model monitoring for CSI feedback enhancement. The UE determines an indication of a status change of the ML functionality/model for CSI feedback enhancement. The status change may be a change from a normal status to a failure status or from a failure status to a normal status. The UE transmits a report to the network entity indicating that the status change of the ML functionality/model for CSI feedback enhancement is detected. After receiving the ML functionality/model failure indication for CSI enhancement, the network entity may configure ML functionality de-activation/switching/fallback to the UE. In this way, the reliability and performance of the wireless communication system is improved.
According to some aspects, a UE receives, from a network entity, a first control signaling indicating an LCM configuration for at least one of an ML functionality or an ML model associated with a CSI report. The LCM configuration indicates an LCM metric. The UE receives, from the network entity, a second control signaling indicating at least one CSI reference signal (CSI-RS) resource for monitoring the LCM metric. The UE transmits, to the network entity, an indication of a status change of the at least one of the ML functionality or the ML model associated with the CSI report. The indication is based on the at least one CSI-RS resource for monitoring the LCM metric.
According to some aspects, a network entity transmits, to a UE, a first control signaling indicating an LCM configuration for at least one of an ML functionality or an ML model associated with a CSI report. The LCM configuration indicating an LCM metric. The network entity transmits, to the UE, a second control signaling indicating at least one CSI reference signal (CSI-RS) resource for monitoring the LCM metric. The network entity receives, from the UE, an indication of a status change of the at least one of the ML functionality or the ML model associated with the CSI report. The indication is based on the at least one CSI-RS resource for monitoring the LCM metric.

## BRIEF DESCRIPTION OF THE DRAWINGS

FIG. 1 illustrates a diagram of a wireless communications system that includes a plurality of user equipments (UEs) and network entities in communication over one or more cells according to an embodiment.

FIG. 2 is a signaling diagram illustrating communications between a user equipment (UE) and a network entity for life cycle management (LCM) on ML for CSI feedback enhancement according to an embodiment.

FIG. 3 illustrates a diagram of examples of monitoring the LCM according to an embodiment.

FIG. 4 illustrates a diagram of an example of sending an indication indicating a status change from a normal status to a failure status according to an embodiment.

FIG. 5 illustrates a diagram of an example of sending an indication indicating a status change from a failure status to a normal status according to an embodiments.

FIG. 6 is a flowchart of a method of wireless communication at a UE according to an embodiment.

FIG. 7 is a flowchart of a method of wireless communication at a network entity according to an embodiment.

FIG. 8 is a diagram illustrating a hardware implementation for an example UE apparatus according to some embodiments.

FIG. 9 is a diagram illustrating a hardware implementation for one or more example network entities according to some embodiments.

## DETAILED DESCRIPTION

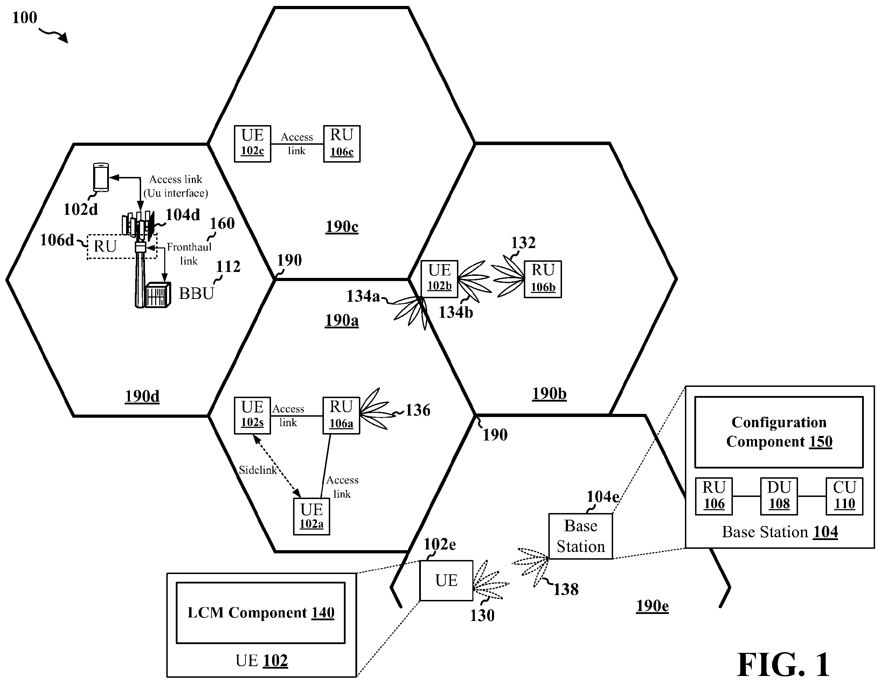

FIG. 1 illustrates a diagram 100 of a wireless communications system associated with a plurality of cells 190. The wireless communications system includes user equipments (UEs) 102 and base stations/network entities 104. Some base stations may include an aggregated base station architecture and other base stations may include a disaggregated base station architecture. The aggregated base station architecture utilizes a radio protocol stack that is physically or logically integrated within a single radio access network (RAN) node. A disaggregated base station architecture utilizes a protocol stack that is physically or logically distributed among two or more units (e.g., radio unit (RU) 106, distributed unit (DU) 108, central unit (CU) 110). For example, a CU 110 is implemented within a RAN node, and one or more DUs 108 may be co-located with the CU 110, or alternatively, may be geographically or virtually distributed throughout one or multiple other RAN nodes. The DUs 108 may be implemented to communicate with one or more RUs 106. Any of the RU 106, the DU 108 and the CU 110 can be implemented as virtual units, such as a virtual radio unit (VRU), a virtual distributed unit (VDU), or a virtual central unit (VCU). The base station/network entity 104 (e.g., an aggregated base station or disaggregated units of the base station, such as the RU 106 or the DU 108), may be referred to as a transmission reception point (TRP).

Operations of the base station 104 and/or network designs may be based on aggregation characteristics of base station functionality. For example, disaggregated base station architectures are utilized in an integrated access backhaul (IAB) network, an open-radio access network (O-RAN) network, or a virtualized radio access network (vRAN), which may also be referred to a cloud radio access network (C-RAN). Disaggregation may include distributing functionality across the two or more units at various physical locations, as well as distributing functionality for at least one unit virtually, which can enable flexibility in network designs. The various units of the disaggregated base station architecture, or the disaggregated RAN architecture, can be configured for wired or wireless communication with at least one other unit. For example, the base stations 104d, 104e and/or the RUs 106a, 106b, 106c, 106d may communicate with the UEs 102a, 102b, 102c, 102d, and/or 102s via one or more radio frequency (RF) access links based on a Uu interface. In examples, multiple RUs 106 and/or base stations 104 may simultaneously serve the UEs 102, such as by intra-cell and/or inter-cell access links between the UEs 102 and the RUs 106/base stations 104.

The RU 106, the DU 108, and the CU 110 may include (or may be coupled to) one or more interfaces configured to transmit or receive information/signals via a wired or wireless transmission medium. For example, a wired interface can be configured to transmit or receive the information/signals over a wired transmission medium, such as via the fronthaul link 160 between the RU 106d and the baseband unit (BBU) 112 of the base station 104d associated with the cell 190d. The BBU 112 includes a DU 108 and a CU 110, which may also have a wired interface (e.g., midhaul link) configured between the DU 108 and the CU 110 to transmit or receive the information/signals between the DU 108 and the CU 110. In further examples, a wireless interface, which may include a receiver, a transmitter, or a transceiver, such as an RF transceiver, configured to transmit and/or receive the information/signals via the wireless transmission medium, such as for information communicated between the RU 106a of the cell 190a and the base station 104e of the cell 190e via cross-cell communication beams 136-138 of the RU 106a and the base station 104e.

The RUs 106 may be configured to implement lower layer functionality. For example, the RU 106 is controlled by the DU 108 and may correspond to a logical node that hosts RF processing functions, or lower layer PHY functionality, such as execution of fast Fourier transform (FFT), inverse FFT (iFFT), digital beamforming, physical random access channel (PRACH) extraction and filtering, etc. The functionality of the RU 106 may be based on the functional split, such as a functional split of lower layers.

The RUs 106 may transmit or receive over-the-air (OTA) communication with one or more UEs 102. For example, the RU 106b of the cell 190b communicates with the UE 102b of the cell 190b via a first set of communication beams 132 of the RU 106b and a second set of communication beams 134b of the UE 102b, which may correspond to inter-cell communication beams or, in some examples, cross-cell communication beams. For instance, the UE 102b of the cell 190b may communicate with the RU 106a of the cell 190a via a third set of communication beams 134a of the UE 102b and a fourth set of communication beams 136 of the RU 106a. DUs 108 can control both real-time and non-real-time features of control plane and user plane communications of the RUs 106.

Any combination of the RU 106, the DU 108, and the CU 110, or reference thereto individually, may correspond to a base station 104. Thus, the base station 104 may include at least one of the RU 106, the DU 108, or the CU 110. The base stations 104 provide the UEs 102 with access to a core network. The base stations 104 may relay communications between the UEs 102 and the core network (not shown). The base stations 104 may be associated with macrocells for higher-power cellular base stations and/or small cells for lower-power cellular base stations. For example, the cell 190e may correspond to a macrocell, whereas the cells 190a-190d may correspond to small cells. Small cells include femtocells, picocells, microcells, etc. A network that includes at least one macrocell and at least one small cell may be referred to as a "heterogeneous network."

Transmissions from a UE 102 to a base station 104/RU 106 are referred to as uplink (UL) transmissions, whereas transmissions from the base station 104/RU 106 to the UE 102 are referred to as downlink (DL) transmissions. Uplink transmissions may also be referred to as reverse link transmissions and downlink transmissions may also be referred to as forward link transmissions. For example, the RU 106d utilizes antennas of the base station 104d of cell 190d to transmit a downlink/forward link communication to the UE 102d or receive an uplink/reverse link communication from the UE 102d based on the Uu interface associated with the access link between the UE 102d and the base station 104d/RU 106d.

Communication links between the UEs 102 and the base stations 104/RUs 106 may be based on multiple-input and multiple-output (MIMO) antenna technology, including spatial multiplexing, beamforming, and/or transmit diversity. The communication links may be associated with one or more carriers. The UEs 102 and the base stations 104/RUs 106 may utilize a spectrum bandwidth of $Y$ MHz (e.g., 5, 10, 15, 20, 100, 400, 800, 1600, 2000, etc. MHz) per carrier allocated in a carrier aggregation of up to a total of $Yx$ MHz, where x component carriers (CCs) are used for communication in each of the uplink and downlink directions. The carriers may or may not be adjacent to each other along a frequency spectrum. In examples, uplink and downlink carriers may be allocated in an asymmetric manner, with more or fewer carriers allocated to either the uplink or the downlink. A primary component carrier and one or more secondary component carriers may be included in the component carriers. The primary component carrier may be associated with a primary cell (PCell) and a secondary component carrier may be associated with a secondary cell (SCell).

Some UEs 102, such as the UEs 102a and 102s, may perform device-to-device (D2D) communications over sidelink. For example, a sidelink communication/D2D link utilizes a spectrum for a wireless wide area network (WWAN) associated with uplink and downlink communications. Such sidelink/D2D communication may be performed through various wireless communications systems, such as wireless fidelity (Wi-Fi) systems, Bluetooth systems, Long Term Evolution (LTE) systems, New Radio (NR) systems, etc.

The UEs 102 and the base stations 104/RUs 106 may each include a plurality of antennas. The plurality of antennas may correspond to antenna elements, antenna panels, and/or antenna arrays that may facilitate beamforming operations. For example, the RU 106b transmits a downlink beamformed signal based on a first set of communication beams 132 to the UE 102b in one or more transmit directions of the RU 106b. The UE 102b may receive the downlink beamformed signal based on a second set of communication beams 134b from the RU 106b in one or more receive directions of the UE 102b. In a further example, the UE 102b may also transmit an uplink beamformed signal (e.g., sounding reference signal (SRS)) to the RU 106b based on the second set of communication beams 134b in one or more transmit directions of the UE 102b. The RU 106b may receive the uplink beamformed signal from the UE 102b in one or more receive directions of the RU 106b. The UE 102b may perform beam training to determine the best receive and transmit directions for the beamformed signals. The transmit and receive directions for the UEs 102 and the base stations 104/RUs 106 may or may not be the same.

In further examples, beamformed signals may be communicated between a first base station/RU 106a and a second base station 104e. For instance, the base station 104e of the cell 190e may transmit a beamformed signal to the RU 106a based on the communication beams 138 in one or more transmit directions of the base station 104e. The RU 106a may receive the beamformed signal from the base station 104e of the cell 190e based on the RU communication beams 136 in one or more receive directions of the RU 106a. In further examples, the base station 104e transmits a downlink beamformed signal to the UE 102e based on the communication beams 138 in one or more transmit directions of the base station 104e. The UE 102e receives the downlink beamformed signal from the base station 104e based on UE communication beams 130 in one or more receive directions of the UE 102e. The UE 102e may also transmit an uplink beamformed signal to the base station 104e based on the UE communication beams 130 in one or more transmit directions of the UE 102e, such that the base station 104e may receive the uplink beamformed signal from the UE 102e in one or more receive directions of the base station 104e.

The base station 104 may include and/or be referred to as a network entity. That is, "network entity" may refer to the base station 104 or at least one unit of the base station 104, such as the RU 106, the DU 108, and/or the CU 110. The base station 104 may also include and/or be referred to as a next generation evolved Node B (ng-eNB), a next generation NB (gNB), an evolved NB (eNB), an access point, a base transceiver station, a radio base station, a radio transceiver, a transceiver function, a basic service set (BSS), an extended service set (ESS), a TRP, a network node, network equipment, or other related terminology. The base station 104 or an entity at the base station 104 can be implemented as an IAB node, a relay node, a sidelink node, an aggregated (monolithic) base station, or a disaggregated base station including one or more RUs 106, DUs 108, and/or CUs 110. A set of aggregated or disaggregated base stations may be referred to as a next generation-radio access network (NG-RAN). In some examples, the UE 102a operates in dual connectivity (DC) with the base station 104e and the base station/RU 106a. In such cases, the base station 104e can be a master node and the base station/RU 160a can be a secondary node.

Still referring to FIG. 1, in certain aspects, any of the UEs 102 may include an LCM component 140 configured to receive, from a network entity, a first control signaling indicating an LCM configuration for at least one of an ML functionality or an ML model associated with a CSI report. The LCM configuration indicates an LCM metric. The LCM component 140 is configured to receive, from the network entity, a second control signaling indicating at least one CSI-RS resource for monitoring the LCM metric. The LCM component 140 is configured to transmit, to the network entity, an indication of a status change of the at least one of the ML functionality or the ML model associated with the CSI report. The indication is based on the at least one CSI-RS resource for monitoring the LCM metric.

In certain aspects, any of the base stations 104 or a network entity of the base stations 104 may include a configuration component 150 configured to transmit, to a UE, a first control signaling indicating an LCM configuration for at least one of an ML functionality or an ML model associated with a CSI report. The LCM configuration indicates an LCM metric. The configuration component 150 is configured to transmit, to the UE, a second control signaling indicating at least one CSI-RS resource for monitoring the LCM metric. The configuration component 150 is configured to receive, from the UE, an indication of a status change of the at least one of the ML functionality or the ML model associated with the CSI report. The indication is based on the at least one CSI-RS resource for monitoring the LCM metric.

Accordingly, FIG. 1 describes a wireless communication system that may be implemented in connection with aspects of one or more other figures described herein. Further, although the following description may be focused on 5G NR, the concepts described herein may be applicable to other similar areas, such as 5G-Advanced and future versions, LTE, LTE-advanced (LTE-A), and other wireless technologies, such as 6G.

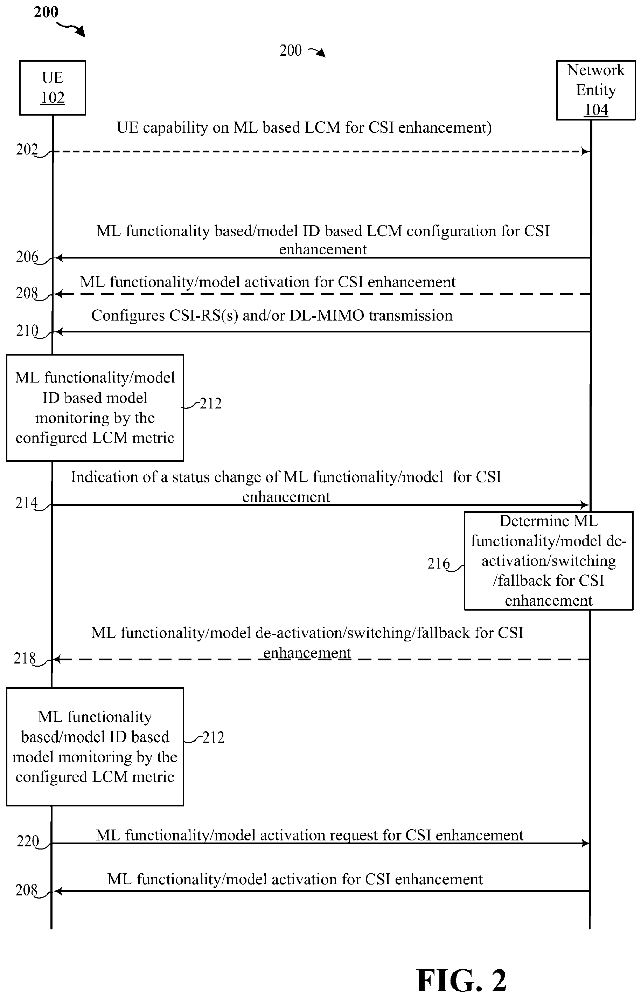

FIG. 2 is a signaling diagram 200 illustrating communications between a UE 102 and a network entity 104 for LCM on ML for CSI feedback enhancement according to an embodiment. The network entity 104 may correspond to a base station or a unit of a base station, such as the RU 106, the DU 108, the CU 110, etc. ML may be used for CSI feedback enhancement, beam management and positioning accuracy enhancement. LCM of ML model may include model training, model deployment, model inference, model monitoring and model updating. LCM procedure may be categorized as functionality-based and/or model-ID-based LCM procedure.

For functionality based LCM procedure, the network may configure the UE to perform LCM by ML functionality but without any information about what ML models are applied corresponding to ML functionality ID(s), or the network may configure the UE to perform the LCM by ML functionality ID(s) but without any information about what ML models are applied corresponding to the ML functionality ID(s), or the network may configure to the UE to perform LCM by functionality ID(s) with the corresponding ML model ID(s). For model ID based LCM procedure, the network may configure the UE to perform the LCM by ML model ID(s). The LCM procedure may include ML functionality/model monitoring, ML functionality/model activation, ML model de-activation, ML model switching and/or ML fallback.

ML for air-interface may include target use case regarding aspects such as performance, complexity, and potential specification impact. For example, initial set of use cases includes: CSI feedback enhancement, e.g., overhead reduction, improved accuracy, prediction; Beam management, e.g., beam prediction in time, and/or spatial domain for overhead and latency reduction, beam selection accuracy improvement; and Positioning accuracy enhancements for different scenarios including, e.g., those with heavy NLOS conditions. The ML approaches for the selected sub use cases may be diverse enough to support various requirements on the gNB-UE collaboration levels. The selection of use cases targets the formulation of a framework to apply ML to the air-interface for these and other use cases. The selection itself does not intend to provide any indication of the prospects of any future normative project.

ML for NR air interface may include ML model, terminology and description to identify common and specific characteristics for framework investigations. The defining stages of ML related algorithms and associated complexity may be characterized, including model generation, e.g., model training (including input/output, pre-/post-process, online/offline as applicable), model validation, model testing, as applicable, and/or inference operation, e.g., input/output, pre-/post-process, as applicable. Various levels of collaboration between UE and gNB pertinent to the selected use cases may be identified, e.g., no collaboration: implementation-based only ML algorithms without information exchange [for comparison purposes], and various levels of UE/gNB collaboration targeting at separate or joint ML operation. Life cycle management of ML model may be characterized: e.g., model training, model deployment, model inference, model monitoring, model updating. Dataset(s) for training, validation, testing, and inference may be identified. Common notation and terminology for ML related functions, procedures and interfaces may be identified.

Regarding ML use case for CSI feedback enhancement, two sub-use cases are ML for CSI compression and ML for CSI prediction. For ML for CSI compression, two sides ML model are assumed that CSI encoder at the UE side and CSI decoder at the network side. Autoencoder (AE) is the reference ML model which is used in ML for CSI compression. By applying the output of ML CSI encoder at the UE side, the UE may transmit CSI feedback, e.g., compressed raw H (CSI) or compressed raw V (precoder) or W2 (beam combining matrix in NR type II CSI codebook) based on a set of network configured beam(s) or a set of UE reported beam(s), with the less bits compared to the legacy PMI reporting method. At the network side, these CSI feedback bits can be used to reconstruct the CSI feedback by CSI decoder.

For ML for CSI prediction, one side ML model is assumed and no specific ML model is referred. The ML model may be applied at the UE side or at the network side. By collecting the historical calculated CSI data at the UE side or at the network side, the ML model may predict the CSI for some future transmission slots. With the future CSI information, the network may have efficient scheduling that CSI-RS(s) may not be configured in some future transmission slots and the UE may not need to calculate CSI for some future transmission slots.

For a configured ML functionality/model for CSI feedback enhancement, it is important for the network and the UE to know whether ML functionality/model for CSI feedback enhancement is working in a normal status or in a failure status. Hence, it is important to make sure the ML functionality/model for CSI feedback enhancement can work well after deployment. It is challenging for the UE and the network entity to determine how to implement an ML functionality/model LCM procedure, such as for ML functionality/model monitoring.

Referring to FIG. 2, the UE 102 may transmit 202 a UE capability signaling to the network entity 104 indicating a UE capability of an ML based LCM for CSI feedback enhancement. The network entity may receive 202 the UE capability signaling from the UE 102 indicating the UE capability of the ML based LCM for CSI feedback enhancement. The network entity 104 transmits 206 a control signaling indicating an ML functionality and/or an ML model based LCM configuration for CSI enhancement to the UE. The UE 102 receives 206 the control signaling for the ML functionality based/model ID based LCM configuration for CSI feedback enhancement. The network entity 104 may transmit 208 a configuration of an ML functionality/model activation for CSI enhancement to the UE 102. The network entity 104 transmits 210 a second control signaling configuring CSI reference signal(s) (CSI-RS(s)) and/or downlink multiple input multiple output (DL-MIMO) transmission resource(s) to the UE 102.

The UE performs 212 ML functionality based/model ID based model monitoring for CSI feedback enhancement. The UE determines an indication of a status change of an ML functionality/model based on the monitoring for CSI feedback enhancement. The status change may be a change from a normal status to a failure status or from the failure status to the normal status. The UE transmits 214 a report to the network entity 104 indicating that the status change of the ML functionality/model for CSI feedback enhancement is detected. After receiving the indication of the status change, the network entity 104 may determine 216 whether to configure an ML functionality/model de-activation, switching, and/or a fallback to the UE. In some implementations, the network entity 104 may transmit 218 a control signaling indicating ML functionality de-activation, switching, or fallback to the UE 102. The UE 102 may receive 218 the control signaling indicating ML functionality de-activation, switching, or fallback to the UE 102. For example, the LCM on ML for CSI feedback enhancement may be performed in the DL-MIMO transmission. In this way, the reliability and performance of the wireless communication system is improved.

The UE may transmit 202, to the network entity, a report indicating the UE capability on ML based LCM for CSI enhancement, e.g., in radio resource control (RRC) signaling. The UE capability on ML based LCM for CSI enhancement may include supported use case(s) for ML CSI enhancement, supported ML functionality ID(s) with the corresponding ML model ID(s), supported ML model ID(s) with the corresponding ML model input type, an LCM metric (*LCM_metric)* and related parameter(s). For example, the LCM metric may include configured LCM metric based on a throughput (*e.g., LCM_metric=tput)* related parameters, configured LCM metric based on an intermediate KPI (e.g., *LCM_metric=intermediate-KPI*) related parameters, or configured LCM metric based on a statistical-distance (e.g., *LCM_metric=statistical-distance*) related parameters. The throughput may refer to PDSCH BLER for DL MIMO transmission. The ML LCM metric may be based on the throughput (tput), the intermediate key performance indicator (KPI), the combination of the throughput and the KPI, the statistical distance, or a combination of the throughput, the KPI and the statistical distance. The detailed content of the UE capability is listed in Table 1 below.

Table 1: UE capability on ML based LCM for CSI enhancement

| UE capability on ML based LCM for CSI enhancement | | |
|---|---|---|
| Parameters | Description | Value |
| *Use_case* | Supported use case(s) for ML based LCM for CSI enhancement | *{csi_compresion, csi_prediction, both}* |
| *Func_ID_list or Func_list* | (1) Supported functionality ID List with corresponding use case(s),<br><br>or<br><br>(2) Supported functionality list with corresponding use case(s) and configurations, where one functionality may correspond to one or a set of configurations including CSI-RS configuration (bandwidth, | *(1) csi_compresion -> {ID-1,ID-2,...,ID-m}*<br>*csi_prediction -> {ID-1,ID-2,...,ID-m}*<br>*Or*<br>*(2) csi_compresion -> {CSI-RS configuration, report content, number of beams, quantization schemes...}*<br>*csi_prediction ->* |
| | number of ports, periodicity, time-domain behavior, number of CSI-RS resources and so on), report content (e.g., channel eigenvector or beam combining matrix, predicted CSIs) and/or CSI measurement configuration (e.g., number of subbands, subband size and so on),<br><br><br>or<br><br>(3) Supported functionality ID List with corresponding use case(s) and configurations, where one functionality ID may correspond to one or a set of configurations including CSI-RS configuration (bandwidth, number of ports, periodicity, time-domain behavior, number of CSI-RS resources and so on), report content (e.g., channel eigenvector or beam combining matrix, predicted CSIs) and/or CSI measurement configuration (e.g., number of subbands, subband size and so on). | *{CSI-RS configuration, report content, number of beams, quantization schemes...}*<br>*or*<br>*(3)csi_compresion->Func_ID-m->{ CSI-RS configuration, report content, number of beams, quantization schemes...,.. }*<br>*csi_prediction->Func_ID-m-> {CSI-RS configuration, report content, number of beams, quantization schemes... ,.. },* |
| *Model_ID_list* | (1) Supported ML model ID list with corresponding use case(s) and functionality ID,<br><br><br>Or<br>(2) Supported ML model ID list with corresponding use case(s) and functionality ID where one model ID may correspond to one or a set of | *(1)csi_compresion->Func_ID-m->{ID-1,..,ID-n }*<br>*csi_prediction->Func_ID-m->{ID-1,..,ID-n },*<br>*or*<br>*(2) csi_compresion->Func_ID-m->{ ID-1: [CSI-RS configuration, report content, number of* |

(continued)

| UE capability on ML based LCM for CSI enhancement | | |
|---|---|---|
| Parameters | Description | Value |
| | configurations including CSI-RS configuration (bandwidth, number of ports, periodicity, time-domain behavior, number of CSI-RS resources and so on), report content (e.g., channel eigenvector or beam combining matrix, predicted CSIs) and/or CSI measurement configuration (e.g., number of subbands, subband size and so on),<br><br>Or<br><br>(3) Supported ML model ID list with corresponding use case(s), where one model ID may correspond to one or a set of configurations including CSI-RS configuration (bandwidth, number of ports, periodicity, time-domain behavior, number of CSI-RS resources and so on), report content (e.g., channel eigenvector or beam combining matrix, predicted CSIs) and/or CSI measurement configuration (e.g., number of subbands, subband size and so on). | *beams, quantization schemes...],.. }*<br>*csi_prediction->Func_ID-m->*<br>*{ ID-1:[CSI-RS configuration, report content, number of beams, quantization schemes... ],.. },*<br>*or*<br>*(3)csi_compresion->Model_ID-m:{ CSI-RS configuration, reportcontent, number of beams, quantization schemes... ],..}*<br>*csi_prediction->Model_ID-m:{ CSI-RS configuration, reportcontent, number of beams, quantization schemes... ],..}* |
| *Model_input_type_list* | (1) Supported ML model input type with corresponding use cases, functionality ID and model ID,<br><br>Or<br><br>(2) Supported ML model input type with corresponding use cases and model ID,<br>Or<br><br>(3) Supported ML Model input type with corresponding use cases<br>Or<br>(4) Supported ML Model input type with corresponding use cases and model ID. | *H(CSI) or V(precoding matrix) or W2(beam combining matrix in NR type II CSI codebook*<br>*(1) csi_compresion -> Func _ID-1:{ID-1(H),..,ID-n(H)}*<br>*csi_compresion -> Func _ID-m:{ID-1(V),..,ID-n(V)}*<br>*csi_prediction -> Func_ID-m:{ID-1(W2),..,ID-n(W2)}*<br>*Or*<br>*(3) csi_compresion -> H*<br>*csi_compresion -> V*<br>*csi_prediction -> W2*<br>*Or*<br>*(4)csi_compresion -> {ID-1(H),..,ID-n(H)}*<br>*csi_compresion -> {ID-1(V),..,ID-n(V)}*<br>*esi_prediction -> {ID-1(W2),..,ID-n(W2)}* |
| *LCM_metric* | LCM metric | *{tput, intermediate-KPI, tput+intermediate-KPI , statistical-distance, all}* |
| LCM metric based on the throughput (tput) related parameters *(e.g., LCM_metric=tput related parameters)* | | |
| *Qin_tput* | ML functionality/model in-sync indication threshold | *BLER=x%* |
| *Qout_tput* | ML functionality/model out-of-sync indication threshold | *BLER=y%* |
| *Nin_tput* | Accumulated number of in-sync indication to determine ML functionality/model in a normal status | *Nin_tput>=1* |

(continued)

| LCM metric based on the throughput (tput) related parameters *(e.g., LCM_metric=tput related parameters)* | | |
|---|---|---|
| *Nout_tput* | Accumulated number of out-of-sync indication to determine ML functionality/model in a failure status | *Nout_tput>=1* |
| *T_tput_interval* | ML functionality/model monitoring interval | *T_tput_interval>0* |
| *T_tput_window* | ML functionality/model monitoring window | *T_tput_window>T_tput_interval>0* |
| LCM metric based on intermediate-KPI related parameters *(e.g., LCM_metric=intermediate-KPI related parameters)* | | |
| *intermediate _kpi* | intermediate KPI | *NMSE, SGSC, both* |
| *Qin_kpi* | ML functionality/model in-sync indication threshold | *accuracy=x%* |
| *Qout_kpi* | ML functionality/model out-of-sync indication threshold | *accuracy=y%* |
| *Nin_kpi* | accumulated number of in-sync indication to determine ML functionality/model in a normal status | *Nin_kpi>=1* |
| *Nout_kpi* | accumulated number of out-of-sync indication to determine ML functionality/model in a failure status | *Nout_kpi>=1* |
| *T_kpi_interval* | ML functionality/model monitoring interval | *T_kpi _interval>0* |
| *T_kpi_window* | ML functionality/model monitoring window | *T_kpi_window>T_kpi _interval >0* |
| LCM metric based on statistical-distance related parameters *(e.g., LCM_metric=statistical-distance related parameters)* | | |
| *ref_mean* | statistical mean of reference distribution for ML model input | *mean* |
| *ref_variance* | statistical variance of reference distribution for ML model input | *variance* |
| *distance _metric* | statistical distance metric for ML model input | *Kullback-Leibler(KL) divergence, Jensen-Shannon (JS) divergence, Wasserstein distance* |
| *min _dataset_size _distance* | minimum size of ML functionality/model monitoring dataset for ML model input | *N>0* |
| *_Qin_distance* | ML functionality/model in-sync indication threshold | *distance>=0* |
| *Qout distance* | ML functionality/model out-of-sync indication threshold | *distance>=0* |
| *Nin_distance* | accumulated number of in-sync indication to determine ML functionality/model in a normal status | *Nin_distance>=1* |
| *Nout_distance* | accumulated number of out-of-sync indication to determine ML functionality/model in a failure status | *Nout_distance>=1* |
| *T_distance _interval* | ML functionality/model monitoring interval | *T_distance _interval>0* |
| *T_distance_window* | ML functionality/model monitoring window | *T_distance_window>T_distance_interval>0* |

Still referring to FIG. 2, after receiving the UE capability on ML based LCM for CSI enhancement, the network entity 104 transmits 206 the control signaling indicating the ML functionality and/or the ML model based LCM configuration for CSI enhancement to the UE. The network entity 104 transmits 206 the control signaling indicating the LCM configuration for at least one of the ML functionality or the ML model associated with a CSI report. The UE 102 receives 206 the control signaling indicating the LCM configuration for the at least one of the ML functionality or the ML model associated with the CSI report. The ML functionality or the ML model based LCM configuration for CSI enhancement includes at least one of the following: configured use case(s) for ML CSI enhancement, configured ML functionality ID(s) with the corresponding ML model ID(s), configured ML model ID(s) with the corresponding ML model input type, configured ML LCM metric. For example, the configured LCM metric may include a configured LCM metric based on the throughput *(e.g., LCM_metric=tput)* related parameters, a configured LCM metric based on the intermediate KPI (e.g., *LCM_metric=intermediate-KPI*) related parameters, or a configured LCM metric based on the statistical-distance (e.g., *LCM_metric=statistical-distance*) related parameters. The detailed content of configuration is listed in Table 2. The network entity may transmit the configuration with at least one of the parameters in Table 2. In some examples, some of the parameters in Table 2 may be predefined. In one example, these parameters may be predefined based on one of the candidate values in Table 2.

Table 2: ML functionality based/model ID based LCM configuration for CSI enhancement

| ML functionality based/model ID based LCM configuration for CSI enhancement | | |
|---|---|---|
| Parameters | Description | Value |
| *Use_case* | Configured use case(s) for ML CSI enhancement | *csi_compresion, csi_prediction,* |
| *Func_ID_list* | (1) Configured functionality list with corresponding use case(s),<br><br>or<br>(2) Configured functionality list with corresponding use case(s) and configurations, where one functionality may correspond to one or a set of configurations including CSI-RS configuration (bandwidth, number of ports, periodicity, time-domain behavior, number of CSI-RS resources and so on), report content (e.g., channel eigenvector or beam combining matrix, predicted CSIs) and/or CSI measurement configuration (e.g., number of subbands, subband size and so on),<br><br><br><br>or<br>(3) Configured functionality ID list with corresponding use case(s) and configurations, where one functionality ID may correspond to one or a set of configurations including CSI-RS configuration (bandwidth, number of ports, periodicity, time-domain behavior, number of CSI-RS resources and so on), report content (e.g., channel eigenvector or beam combining matrix, predicted CSIs) and/or CSI measurement configuration (e.g., number of subbands, subband size and so on). | *(1) csi_compresion -> {ID-1,ID-2,...,ID-m}*<br>*csi_prediction -> {ID-1,ID-2,...,ID-m}*<br>*Or*<br>*(2) csi_compresion -> {CSI-RS configuration, report content, number of beams, quantization schemes...}*<br>*csi_prediction -> {CSI-RS configuration, report content, number of beams, quantization schemes...}*<br><br>*or*<br>*(3)csi_compresion->Func_ID-m->{ ID-1: [CSI-RS configuration, report content, number of beams, quantization schemes...],.. }*<br><br>*csi_prediction->Func_ID-m-> { ID-1:[CSI-RS configuration, report content, number of beams, quantization schemes... ],.. },* |
| *Model_ID_list* | (1) Configured ML model ID list with corresponding use case(s) and functionality ID,<br><br>Or | *(1)csi_compresion->Func_ID-m->{ID-1,..,ID-n }*<br>*csi_prediction->Func_ID-m->{ID-1,..,ID-n },*<br>*or* |

(continued)

| ML functionality based/model ID based LCM configuration for CSI enhancement | | |
|---|---|---|
| Parameters | Description | Value |
| | (2) Configured ML model ID list with corresponding use case(s) and functionality ID, where one model ID may correspond to one or a set of configurations including CSI-RS configuration (bandwidth, number of ports, periodicity, time-domain behavior, number of CSI-RS resources and so on), report content (e.g., channel eigenvector or beam combining matrix, predicted CSIs) and/or CSI measurement configuration (e.g., number of subbands, subband size and so on),<br><br>Or<br><br>(3) Configured ML model ID list with corresponding use case(s), where one model ID may correspond to one or a set of configurations including CSI-RS configuration (bandwidth, number of ports, periodicity, time-domain behavior, number of CSI-RS resources and so on), report content (e.g., channel eigenvector or beam combining matrix, predicted CSIs) and/or CSI measurement configuration (e.g., number of subbands, subband size and so on). | *(2) csi_compresion->Func_ID-m->{ ID-1: [CSI-RS configuration, report content, number of beams, quantization schemes...],.. }*<br>*csi_prediction->Func_ID-m-> {ID-1:[CSI-RS configuration, report content, number of beams, quantization schemes... ],.. },*<br>*or*<br>*(3)csi_compresion->Model_ID-m:{ CSI-RS configuration, reportcontent, number of beams, quantization schemes... ],..}*<br><br><br>*csi_prediction->Model_ID-m:{ CSI-RS configuration, reportcontent, number of beams, quantization schemes... ],..}* |
| *Model_input_type_list* | (1) Configured ML model input type with corresponding use cases, functionality ID and model ID,<br><br>Or<br><br>(2) Configured ML model input type with corresponding use cases and model ID,<br><br>Or | *H(CSI) or V(precoding matrix) or W2(beam combining matrix in NR type II CSI codebook*<br>*(1) csi_compresion -> Func _ID-1:{ID-1(H),..,ID-n(H)}*<br>*csi_compresion-> Func _ID-m:{ID-1(V),..,ID-n(V)}*<br>*esi_prediction -> Func _ID-m:{ID-1(W2),..,ID-n(W2)}* |
| | (3) Configured ML model input type with corresponding use cases,<br>Or<br><br>(4) Configured ML model input type with corresponding use cases and model ID. | *Or*<br>*(3) csi_compresion -> H csi_compresion -> V csi_prediction -> W2*<br>*Or*<br>*(4)csi_compresion -> {ID-1(H),..,ID-n(H)}*<br>*csi_compresion -> {ID-1(V),..,ID-n(V)}*<br>*csi_prediction -> {ID-1(W2),..,ID-n(W2)}* |

(continued)

| ML functionality based/model ID based LCM configuration for CSI enhancement | | |
|---|---|---|
| Parameters | Description | Value |
| LCM_metric | Configured LCM metric | tput, intermediate-KPI, tput+intermediate-KPI , statistical-distance, all |
| LCM metric based on the throughput (tput) related parameters (e.g., LCM_metric=tput related parameters) | | |
| Qin_tput | Configured ML functionality/model in-sync indication threshold | BLER=x% |
| Qout_tput | Configured ML functionality/model out-of-sync indication threshold | BLER=y% |
| Nin_tput | Configured accumulated number of in-sync indication to determine ML functionality/model in a normal status | Nin_tput>=1 |
| Nout_tput | Configured accumulated number of out-of-sync indication to determine ML functionality/model in a failure status | Nout_tput>=1 |
| T_tput_interval | Configured ML functionality/model monitoring interval | T_tput_interval>0 |
| T_tput_window | Configured ML functionality/model monitoring window | T_tput_window>T_tput_interval>0 |
| LCM metric based on intermediate-KPI related parameters (e.g., LCM_metric=intermediate-KPI related parameters) | | |
| Intermediate _kpi | Configured intermediate KPI | NMSE, SGSC |
| Qin_kpi | Configured ML functionality/model in-sync indication threshold | accuracy=x% |
| Qout_kpi | Configured ML functionality/model out-of-sync indication threshold | accuracy=y% |
| Nin_kpi | Configured accumulated number of in-sync indication to determine ML functionality/model in a normal status | Nin_kpi>=1 |
| Nout_kpi | Configured accumulated number of out-of-sync indication to determine ML functionality/model in a failure status | Nout_kpi>=1 |
| T_kpi_interval | Configured ML functionality/model monitoring interval | T_kpi_interval>0 |
| T_kpi_window | Configured ML functionality/model monitoring window | T_kpi_window>T_kpi_interval>0 |
| LCM metric based on statistical-distance related parameters (e.g., LCM_metric=statistical-distance related parameters) | | |
| Ref_mean | Configured statistical mean of reference distribution for ML model input | mean |
| Ref_variance | Configured statistical variance of reference distribution for ML model input | variance |
| Distance _metric | Configured statistical distance metric for ML model input | Kullback-Leibler(KL) divergence, Jensen-Shannon (JS) divergence, Wasserstein distance |

(continued)

| LCM metric based on statistical-distance related parameters (e.g., *LCM_metric=statistical-distance* related parameters) | | |
|---|---|---|
| *Min_dataset_size_distance* | Configured minimum size of ML functionality/model monitoring dataset for ML model input | *N>0* |
| *Qin_distance* | Configured ML functionality/model in-sync indication threshold | *distance>=0* |
| *Qout_distance* | Configured ML functionality/model out-of-sync indication threshold | *distance>=0* |
| *Nin_distance* | Configured accumulated number of in-sync indication to determine ML functionality in a normal status | *Nin_distance>=1* |
| *Nout_distance* | Configured accumulated number of out-of-sync indication to determine ML functionality in a failure status | *Nout_distance>=1* |
| *T_distance _interval* | Configured ML functionality/model monitoring interval | *T_distance_interval>0* |
| *T_distance_window* | Configured ML functionality/model monitoring window | *T_distance_window>T_distance_interval>0* |

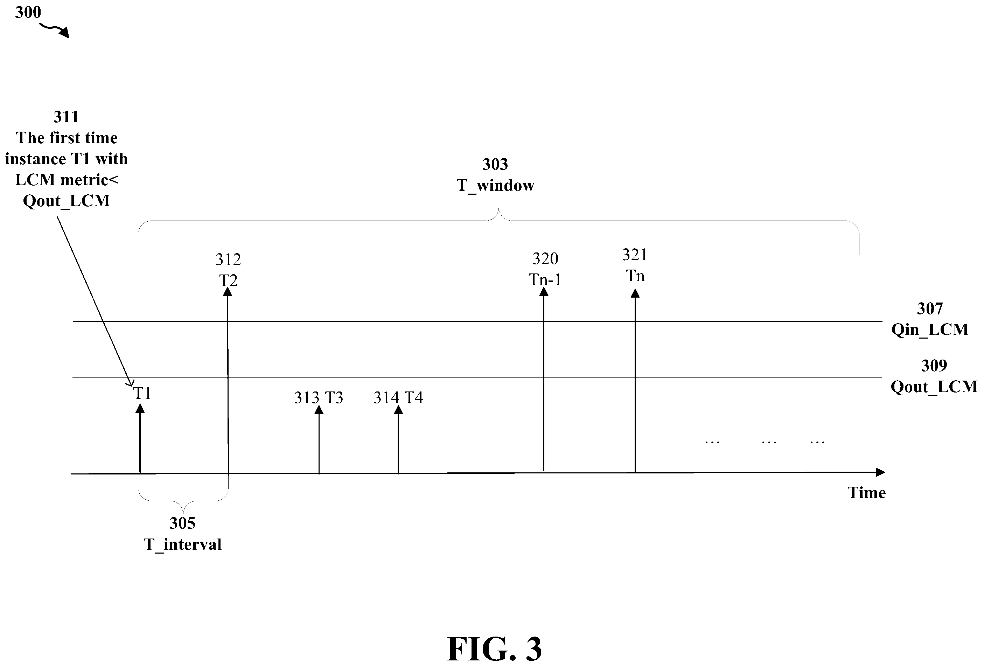

After transmitting 206 the control signaling indicating the LCM configuration for at least one of the ML functionality or the ML model associated with the CSI report, the network entity 104 may configure the ML functionality/model activation for CSI enhancement. The network entity 104 may transmit 208 a configuration of the ML functionality/model activation for CSI enhancement to the UE 102. The network entity 104 transmits 210 a second control signaling configuring CSI reference signal(s) (CSI-RS(s)) and/or downlink multiple input multiple output (DL-MIMO) transmission resource(s) to the UE 102. In some examples, the network entity 104 transmits 210 the second control signaling indicating at least one CSI-RS resource and/or a DL-MIMO transmission resource. The UE 102 receives 210 the second control signaling indicating the at least one CSI-RS resource and/or a DL-MIMO transmission resource. In some examples, the network entity may transmit the configuration of 206 and 208 by the same RRC reconfiguration message. The UE performs 212 the ML functionality/model ID based model monitoring based on the configured LCM metric. An example of monitoring the LCM is illustrated in FIG. 3.

FIG. 3 illustrates a diagram 300 of examples of monitoring the LCM according to embodiments. For the ML functionality based/model ID based model monitoring, depending on different LCM metric configured by the network entity 104, the UE 102 may perform the ML model monitoring on an applied ML model in different ways.

The network entity 104 may configure and transmit one or more CSI-RS resources for the ML functionality/model-ID based model monitoring. In some implementations, the network entity configures different CSI-RS resources for different ML functionalities. In some other implementations, the network entity configures different CSI-RS resources for different ML models.

The UE 102 may perform the ML functionality/model ID based model monitoring on the applied ML model based on the LCM metric. The UE may detect or determine a status change of the ML functionality or the ML model associated with a CSI report based on a configured ML functionality/model in-sync indication threshold, a configured ML functionality/model out-of-sync indication threshold, a configured accumulated number of in-sync indication to determine ML functionality/model in a normal status, and/or a configured accumulated number of out-of-sync to determine ML functionality/model in a failure status.

The LCM metric may include a throughput. In some examples, if the network entity configures the LCM metric to be the throughput (tput) (e.g., *LCM_metric=tput*) to the UE or the LCM metric is defined as tput, the UE may determine an interval at which to monitor the LCM metric to be a time interval 305 of the throughput (e.g., T_interval=*T_tput_interval*) and a time window during which to monitor the LCM metric to be a time window 307 of the throughput (e.g., T_window=-*T_tput_window)*. Then, the UE calculates the throughput as the calculated LCM metric (e.g., LCM_tput_metric) by physical downlink shared channel (PDSCH) downlink (DL) block error rate (BLER) or hypothetical BLER based on at least one CSI-RS resource every time interval 305 (e.g., T_interval). For example, the hypothetical BLER may be determined from a list or a table (e.g., look-up table) of PDCCH and/or PDSCH transmission configurations.

As an example, when the LCM metric is the throughput (e.g., *LCM_metric=tput),* the UE may determine an initial value for the accumulated number of out-of-sync indication for LCM_metric=throughput (e.g., Nout_tput_acc) is zero, and an initial value for the accumulated number of in-sync indication for LCM_metric= throughput (e.g., Nin_tput_acc) is zero at the UE side. In one example, if the out-of-sync indication threshold for LCM_metric= throughput *(e.g., Qout_tput)* and/or the in-sync indication threshold for LCM_metric= throughput *(e.g., Qin_tput)* are not configured by the network entity, the UE may determine the out-of-sync indication threshold for LCM_metric= throughput *(e.g., Qout_tput)* and/or the in-sync indication threshold for LCM_metric= throughput *(e.g., Qin_tput)* by a predefined value or by hypothetical BLER based on at least one CSI-RS resource and/or on at least one synchronization signal block (SSB).

In some examples, for every time interval, if the calculated LCM throughput metric (LCM_tput_metric) is less than or equal to the out-of-sync indication threshold *(e.g., Qout_LCM 309)* for LCM_metric=throughput *(e.g., Qout tput),* then the accumulated number of out-of-sync indication (e.g., Nout_tput_acc) is increased by 1. If the calculated LCM metric throughput (e.g., LCM_tput_metric) is larger than the in-sync indication threshold *(e.g., Qin _LCM 307)* for LCM_metric= throughput *(e.g., Qin_tput),* then the accumulated number of in-sync indication for LCM_metric= throughput (e.g., Nin_tput_acc) is increased by 1.

Referring to FIG. 3, when the timer of the monitoring window (T_window) 303 is not activated at the UE side and the first LCM metric throughput (e.g., LCM_tput _metric) is less than or equal to the out-of-sync indication threshold for LCM_metric= throughput *(e.g., Qout_tput)* is detected at the time instance T1 311, the UE activates the timer of the monitoring window (T_window) 303 at the UE side. The UE may still monitor the LCM when the timer of the monitoring window (T_window) 303 is not activated.

For every time interval, if the monitoring window (T_window) 303 is not expired, in a first scenario, when the accumulated number of in-sync indication for LCM_metric= throughput (e.g., Nin_tput_acc) reaches a predetermined accumulated number threshold for in-sync indication (e.g., *Nin_tput),* the UE may determine the ML Model in the normal status. The predetermined accumulated number threshold for in-sync indication may be a configured accumulated number of in-sync indication to determine ML functionality/model in a normal status (e.g., *Nin_tput),* which may be configured by the network entity 104, or predefined. The predetermined accumulated number threshold for in-sync indication may be any integer larger than 1. For example, the predetermined accumulated number threshold for in-sync indication may be 5, when the accumulated number of in-sync indication for LCM_metric=throughput (e.g., Nin_tput_acc) is equal to 5, (e.g., when the UE detects 5 time instances (e.g., T2 312,..., Tn-1 320, and Tn 321) with the calculated LCM metric throughput (e.g., LCM_tput_metric) larger than the in-sync indication threshold *(e.g., Qin_tput)),* the UE may determine the ML Model in the normal status. The UE may reset the accumulated number of out-of-sync indication for LCM_metric= throughput (e.g., Nout_tput_acc) and the accumulated number of in-sync indication for LCM_metric=- throughput (e.g., Nin_tput_acc) to be zero, and stop the monitoring window (T_window) 303.

For every time interval, if the monitoring window (T_window) 303 is not expired, in a second scenario, the accumulated number of out-of-sync indication for LCM_metric=throughput (e.g., Nout_tput_acc) is larger than or equal to a predetermined accumulated number threshold for out-of-sync indication (e.g., *Nout_tput).* The predetermined accumulated number threshold for out-of-sync indication may be a configured accumulated number of out-of-sync indication to determine ML functionality/model in a failure status, which may be configured by the network entity 104, or predefined. The predetermined accumulated number threshold for out-of-sync indication may be any integer larger than 1. For example, the predetermined accumulated number threshold for out-of-sync indication may be 10. When the UE detects 10 time instances (e.g., T3 313, T4 314, ...) with the calculated LCM throughput metric (LCM_tput_metric) less than or equal to the out-of-sync indication threshold for LCM_metric= throughput *(e.g., Qout_tput),* the accumulated number of out-of-sync indication for LCM_metric= throughput (e.g., Nout_tput_acc) is equal to 10.

In the second scenario, then the UE may determine the status based on the accumulated number of in-sync indication for LCM_metric= throughput (e.g., Nin_tput_acc). When the accumulated number of in-sync indication for LCM_metric= throughput (e.g., Nin_tput_acc) is larger than or equal to the predetermined accumulated number threshold for in-sync indication, the UE may determine the ML Model in the normal status. The UE may reset the accumulated number of out-of-sync indication for LCM_metric= throughput (e.g., Nout_tput _acc) and the accumulated number of in-sync indication for LCM_metric= throughput (e.g., Nin_tput_acc) to be zero, and stop the monitoring window (T_window) 303. Otherwise (e.g., when the accumulated number of in-sync indication for LCM_metric= throughput (e.g., Nin_tput_acc) is less than the predetermined accumulated number threshold for in-sync indication), the UE may determine the ML Model in the failure status, and the UE may reset the accumulated number of out-of-sync indication for LCM_metric= throughput (e.g., Nout_tput_acc) and the accumulated number of in-sync indication for LCM_metric= throughput (e.g., Nin_tput_acc) to be zero and stop the monitoring window (T_window) 303.

For every time interval, if the monitoring window (T_window) 303 is expired, when the accumulated number of out-of-sync indication for LCM_metric= throughput (e.g., Nout_tput_acc) is less than the predetermined accumulated number threshold for out-of-sync indication *(e.g., Nout_tput),* the UE may determine the ML Model in the normal status, the UE may reset the accumulated number of out-of-sync indication for LCM_metric= throughput (e.g., Nout_tput_acc) and the accumulated number of in-sync indication for LCM_metric= throughput (e.g., Nin_tput_acc) to be zero.

In some implementations, the UE may determine the time interval based on at least one of the following factors: a time interval of the throughput, DRX cycle, cell DTX cycle, *Tcsi-rs* (CSI-RS transmission period), per-UE/per-frequency range (FR) measurement gap repetition period (MGRP), $T_{SMTC}$ SSB-based Measurement Timing configuration period (SMTC period). The UE may determine the time window based on at least one of the factors: the time interval, *the* time interval of the throughput, time window of the throughput, DRX cycle and cell DTX cycle, *Tcsi-rs* (CSI-RS transmission period), per-UE/per-FR measurement gap repetition period (MGRP), $T_{SMTC}$ (SMTC period).

In some implementations, the UE may determine the in-sync time interval/ time window and out-of-sync time interval/ time window instead of only time interval/ time window for ML functionality based/model-ID based model monitoring on the applied ML model.

In some examples, if the network entity configures the LCM metric to be the throughput, or the LCM metric is defined as the throughput, and the network entity configures discontinuous reception (DRX) to the UE, the UE may determine T_interval = *lcm*(*T_tput_interval,* DRX_Cycle), where *lcm* means least common multiple. Then, the UE may determine T_window = T_interval * max (ceiling (*T_tput_ window*/*T_tput_interval),* ceiling (*T_tput_window*/DRX_Cycle)). In another implementation, the UE may determine T_window = T_interval * min (ceiling (*T_tput_ window*/*T_tput_interval),* ceiling(*T_tput_window*/DRX_Cycle)).

In some examples, if the network entity configures the LCM metric to be the throughput, or the LCM metric is defined as the throughput, and the network entity configures the cell discontinuous transmission (DTX) to the UE, the UE may determine T_interval = *lcm*(*T_tput_interval,* DTX _Cycle) where *lcm* means least common multiple. Then, the UE may determine T_window = T_interval * max(ceiling(*T_tput_window*/*T_tput_interval),* ceiling(*T_tput_*window/DTX_Cycle)). In another implementation, the UE may determine T_window = T_interval * min(ceiling(*T_tput_window*/*T_tput interval),* ceiling(*T_tput_*window/DTX_Cycle)).

In some examples, if the network entity configures the LCM metric to be the throughput, or the LCM metric is defined as the throughput, and the network entity configures cell DTX and DRX to the UE, the UE may determine T_interval = *lcm* (*T_tput_interval,*DTX_Cycle, DRX_Cycle), where *lcm* means least common multiple. Then, the UE determines T_window = T_interval * max (ceiling (*T_tput_window*/*T_tput_interval),* ceiling (*T_tput_window*/DTX _Cycle), ceiling (*T_tput_window*/DRX_Cycle)). In another implementation, the UE determines T_window = T_interval * min (ceiling (*T_tput_window*/*T_tput_interval),* ceiling (*T_tput_window*/DTX_Cycle), ceiling (*T_tput_window*/DRX_Cycle)).

In some examples, if the network entity configures the LCM metric to be the throughput, or the LCM metric is defined as the throughput, and the network entity configures cell DTX and DRX to the UE, and the network entity configures *Tcsi-rs* per-UE/per-FR MGRP, and $T_{SMTC}$ (SMTC period) to the UE, the UE may determine T_interval = *lcm* (*T_tput_interval,* DTX_Cycle,DRX_Cycle, T*csi-rs,* max (per-UE MGRP,per-FR MGRP), $T_{SMTC}$), where *lcm* means least common multiple. Then, the UE may determine T_window = T_interval * max (ceiling (*T_tput_window*/*T_tput_interval),* ceiling (*T_tput_window*/DTX _Cycle), ceiling (*T_tput_*window/DRX _Cycle), ceiling (*T_tput_window*/T*csi-rs*), ceiling (*T_tput_window*/*max(per-UE* MGRP, per-FR MGRP)), ceiling (*T_tput_window*/ $T_{SMTC}$)). In another implementation, the UE determines T_window = T_interval * min (ceiling (*T_tput_window*/*T_tput_interval),* ceiling (*T_tput_*window/DTX_Cycle), ceiling (*T_tput_*window/DRX _Cycle), ceiling (*T_tput_window*/ *Tcsi-rs),* ceiling (*T_tput_*window/-max(per-UE MGRP,per-FR MGRP)), ceiling (*T_tput_window*/ $T_{SMTC}$)).

The LCM metric (*LCM_metric*) may include an intermediate KPI *(intermediate-KPI).* In some examples, if the network entity configures *LCM_metric=intermediate-KPI* to the UE or the the *LCM_metric* is defined as *intermediate-KPI,* the UE may determine T_interval=*T_kpi _interval* and T_window=*T_kpi_window.* Then, the UE may calculate the LCM_metric by *NMSE* or *SGSC* or both based on at least one configured CSI-RS resource every T_interval.

When the LCM metric (*LCM_metric)* is the intermediate KPI (*intermediate-KPI*), the UE may determine an initial value for the accumulated number of out-of-sync indication for *LCM_metric=intermediate-KPI* (Nout_kpi_acc) to be zero, and an initial value for accumulated number of in-sync indication for *LCM_metric=intermediate-KPI (e.g.,* Nin_kpi_acc) to be zero. In one implementation, if the out-of-sync indication threshold for LCM_metric= KPI (e.g., *Qout_kpi)* and/or the in-sync indication threshold for LCM_metric= KPI (e.g., *Qin_kpi)* are not configured by the network entity, the UE determines *Qout_kpi* and/or *Qin_kpi* by a predefined value.

In some examples, for every time interval, if the calculated LCM KPI metric (LCM_kpi_ metric) is less than or equal to the out-of-sync indication threshold for LCM_metric= KPI *(e.g., Qout_kpi),* then the accumulated number of out-of-sync indication for KPI (e.g., *Nout_kpi_acc)* is increased by 1. If the calculated LCM metric for LCM_metric=KPI (e.g., LCM_kpi_metric) is larger than the in-sync indication threshold for LCM_metric= KPI *(e.g., Qin_kpi),* then the accumulated number of in-sync indication for LCM_metric= KPI (e.g., Nin_kpi_acc) is increased by 1.

When the timer of the monitoring window (T_window) is not activated at the UE side and the first LCM KPI metric (e.g., LCM_kpi_metric) is less than or equal to the out-of-sync indication threshold for KPI *(e.g., Qout_kpi)* is detected at the time instance T1, the UE activates the timer of the monitoring window (T_window) at the UE side. The UE may still monitor the LCM when the timer of the monitoring window (T_window) is not activated.

For every time interval, if the monitoring window (T_window) 303 is not expired, in a first scenario, when the accumulated number of in-sync indication for LCM_metric= KPI (e.g., Nin_kpi_acc) reaches an accumulated predetermined accumulated number threshold for in-sync indication (e.g., *Nin_kpi),* the UE may determine the ML Model in the normal status. The predetermined accumulated number threshold for in-sync indication may be a configured accumulated number of in-sync indication to determine ML functionality/model in a normal status, which may be configured by the network entity 104, or predefined. The UE may reset the accumulated number of out-of-sync indication for LCM_metric= KPI (e.g., Nout_kpi_acc) and the accumulated number of in-sync indication for LCM_metric= KPI (e.g., Nin_kpi_acc) to be zero, and stop the monitoring window (T_window).

For every time interval, if the monitoring window (T_window) 303 is not expired, in a second scenario, the accumulated number of out-of-sync indication for LCM_metric=KPI (e.g., Nout_kpi_acc) is larger than or equal to a predetermined accumulated number threshold for out-of-sync indication (e.g., Nout_kpi). The predetermined accumulated number threshold for out-of-sync indication may be a configured accumulated number of out-of-sync indication to determine the ML functionality/model in a failure status, which may be configured by the network entity 104, or predefined. The predetermined accumulated number threshold for out-of-sync indication may be any integer larger than 1. In the second scenario, then the UE may determine the status based on the accumulated number of in-sync indication for LCM_metric= KPI (e.g., Nin_kpi_acc). When the accumulated number of in-sync indication for LCM_metric= KPI (e.g., Nin_kpi_acc) is larger than or equal to the predetermined accumulated number threshold for in-sync indication, the UE may determine the ML Model in the normal status. The UE may reset the accumulated number of out-of-sync indication for LCM_metric= KPI (e.g., Nout_kpi_acc) and the accumulated number of in-sync indication for LCM_metric= KPI (e.g., Nin_kpi_acc) to be zero, and stop the monitoring window (T_window) 303. Otherwise (e.g., when the accumulated number of in-sync indication for LCM_metric= KPI (e.g., Nin_kpi_acc) is less than the predetermined accumulated number threshold for in-sync indication), the UE may determine the ML Model in the failure status, and the UE may reset the accumulated number of out-of-sync indication for LCM_metric= KPI (e.g., Nout_kpi_acc) and the accumulated number of in-sync indication for LCM_metric= KPI (e.g., Nin_kpi_acc) to be zero and stop the monitoring window (T_window) 303.

For every time interval, if the monitoring window (T_window) 303 is expired, when the accumulated number of out-of-sync indication for LCM_metric= KPI (e.g., Nout_kpi_acc) is less than the predetermined accumulated number threshold for out-of-sync indication (e.g., *Nout_kpi),* the UE may determine the ML Model in the normal status, the UE may reset the accumulated number of out-of-sync indication for LCM_metric= KPI (e.g., Nout_kpi_acc) and the accumulated number of in-sync indication for LCM_metric= KPI (e.g., Nin_kpi_acc) to be zero.

In some examples, for ML functionality based/model ID based model monitoring on the applied ML model, if the network configures *LCM_metric=intermediate-KPI* or the *LCM_metric* is defined as *intermediate-KPI,* and the network configures DRX to the UE, the UE may determine T_interval = *lcm*(T_kpi_interval,DRX_Cycle), where *lcm* means least common multiple. Then, the UE may determine T_window = T _interval * max (ceiling *(T_kpi _window/T_kpi_interval),* ceiling *(T_kpi_window/DRX_Cycle)).* In another implementation, the UE may determine T_window = T_interval * min (ceiling *(T_kpi_window/T_kpi_interval),* ceiling *(T_kpi_window/DRX_Cycle)).*

In some examples, for ML functionality based/model ID based model monitoring on the applied ML model, if the network configures *LCM_metric=intermediate-KPI* or the *LCM_metric* is defined as *intermediate-KPI* and the network configures DTX to the UE, the UE may determine T_interval = *lcm* (T_kpi _interval, DTX _Cycle) where *lcm* means least common multiple. Then, the UE may determine T_window = T_interval * max (ceiling *(T_kpi_window/T_kpi interval),* ceiling *(T_kpi_window/DTX_Cycle)).* In another implementation, the UE may determine T_window = T_interval * min (ceiling *(T_kpi_window/T_kpi interval), ceiling(T_kpi_window/DTX_Cycle)).*

In some examples, for ML functionality based/model ID based model monitoring on the applied ML model, if the network entity configures *LCM_metric=intermediate-KPI* or the *LCM_metric* is defined as *intermediate-KPI,* and the network entity configures cell DTX and DRX to the UE, the UE may determine T_interval = *lcm*(T_kpi_interval,DTX_Cycle,DRX_Cycle), where *lcm* means least common multiple. Then, the UE may determine T_window = T_interval * max (ceiling *(T_kpi_window/T_kpi_interval),* ceiling *(T_kpi_window/* DTX _Cycle), ceiling *(T_kpi_window/DRX_Cycle)).* In another implementation, the UE may determine T_window = T_interval * min (ceiling *(T_kpi_window/T_kpi interval),* ceiling*(T_kpi_window/* DTX _Cycle), *ceiling(T_kpi_*window/DRX _Cycle)).

In some examples, for ML functionality based/model ID based model monitoring on the applied ML model, if the network entity configures *LCM_metric= intermediate-KPI,* or the *LCM_metric* is defined as *intermediate-KPI,* and the network entity configures cell DTX and DRX to the UE, and the network entity configures T*csi-rs* per-UE/per-FR MGRP, and T$_{SMTC}$ (SMTC period) to the UE, the UE may determine T_interval = *lcm* (T_kpi_interval,DTX_Cycle, DRX_Cycle,Tcsi-*rs,* max (per-UE MGRP,per-FR MGRP), T$_{SMTC}$), where *lcm* means least common multiple. Then, the UE may determine T_window = T_interval * max (ceiling *(T_kpi_window/T_kpi_interval),* ceiling *(T_kpi_window/*DTX_Cycle), ceiling *(T tput_window/*DRX_Cycle), ceiling *(T_tput_window/ Tcsi-rs),* ceiling *(T_kpi_window/*max(per-UE MGRP, per-FR MGRP)), ceiling(T_kpi_window/ T$_{SMTC}$)). In another implementation, the UE may determine T_window = T_interval * min (ceiling*(T_kpi_window/T_kpi_interval),* ceiling *(T_kpi_window/*DTX _Cycle), ceiling(T_kpi_window/DRX_Cycle), ceiling*(T_kpi_window/ Tcsi-rs),* ceiling *(T_kpi_window/*max(per-UE MGRP,per-FR MGRP)), ceiling(T_kpi_window/ T$_{SMTC}$)).

The LCM metric may be a combination of the throughput and the intermediate KPI (e.g., LCM_metric= tput+intermediate-KPI). In some examples, for ML functionality based/model ID based model monitoring on the applied ML model, if the network entity configures *LCM_metric=tput+intermediate-KPI* to the UE or the *LCM_metric* is defined as *tput+intermediate-KPI,* the UE may first determine T_interval = *lcm (T_tput_interval, T_kpi_interval)* and T_window= T_interval * max (ceiling (*T_tput_window*/*T_tput_interval*), ceiling(*T_kpi_window*/*T_kpi_interval*)). Then, the UE calculates LCM_tput_metric by PDSCH DL BLER or hypothetical BLER based on at least one configured CSI-RS resource and LCM_kpi_metric by *NMSE* or *SGSC* based on at least one configured CSI-RS resource every T_interval.

The UE may determine an initial value for the accumulated number of out-of-sync indication for *LCM_metric=tput* (Nout_tput_acc)=0, an initial value for the accumulated number of in-sync indication for *LCM_metric=tput* (Nin_tput _acc) =0, the accumulated number of out-of-sync indication for *LCM_metric=intermediate*-(Nout_kpi_acc) =0, and the accumulated number of in-sync indication for *LCM_metric=intermediate*- (Nin_kpi_acc) =0. In one implementation, if *Qout_tput* and/or *Qin_tput* are not configured by the network entity, the UE determines *Qout_tput* and/or *Qin_tput* by a predefined value or by hypothetical BLER based on at least one CSI-RS resource and/or on at least one SSB. In one implementation, if *Qout_kpi* and/or *Qin_kpi* are not configured by the network entity, the UE determines *Qout_kpi* and/or *Qin_kpi* by a predefined value.

In some examples, for every time interval, if the calculated LCM throughput metric (e.g., LCM_tput_metric) is less than or equal to the out-of-sync indication threshold for LCM_metric= throughput (*Qout_tput),* then the accumulated number of out-of-sync indication for LCM_metric= throughput (e.g., Nout_tput_acc) is increased by 1. if the calculated LCM metric throughput (e.g., LCM_tput_metric) is larger than the in-sync indication threshold for LCM_metric= throughput (*e.g.*, *Qin_tput),* then the accumulated number of in-sync indication for LCM_metric= throughput (e.g., Nin_tput_acc) is increased by 1; if the calculated LCM for LCM_metric= KPI metric (LCM_kpi_metric) is less than or equal to the out-of-sync indication threshold for for LCM_metric= KPI *(e.g., Qout_kpi)*, then the accumulated number of out-of-sync indication for for LCM_metric= KPI (e.g., Nout_*kpi*_acc) is increased by 1. If the calculated LCM metric throughput (e.g., LCM_kpi_ metric) is larger than the in-sync indication threshold for for LCM_metric= KPI *(e.g., Qin_kpi)*, then the accumulated number of in-sync indication for for LCM_metric= KPI (e.g., Nin_kpi_acc) is increased by 1.

When the timer of the monitoring window (T_window) 303 is not activated at the UE side and the first LCM metric throughput (e.g., LCM_tput_metric) is less than or equal to the out-of-sync indication threshold *(e.g., Qout_tput)* or the first LCM for LCM_metric= KPI metric (LCM_kpi_metric) is less than or equal to the out-of-sync indication threshold *(e.g., Qout_kpi)* is detected at the time instance T1 311, the UE activates the timer of the monitoring window (T_window) 303 at the UE side. The UE may still monitor the LCM when the timer of the monitoring window (T_window) 303 is not activated.

For every time interval, if the monitoring window (T_window) 303 is not expired, in a first scenario, when the accumulated number of in-sync indication for LCM_metric= throughput (e.g., Nin_tput_acc) reaches a predetermined accumulated number threshold for in-sync indication or the accumulated number of in-sync indication for LCM_metric= KPI (e.g., Nin_kpi_acc) reaches the predetermined accumulated number threshold for in-sync indication, the UE may determine the ML Model in the normal status. The UE may reset the accumulated number of out-of-sync indication for LCM_metric= throughput (e.g., Nout_tput_acc) to be zero, the accumulated number of in-sync indication for LCM_metric= throughput (e.g., Nin_tput_acc) to be zero, the accumulated number of out-of-sync indication for for LCM_metric= KPI (e.g., Nout_kpi_acc) to be zero, the accumulated number of in-sync indication for for LCM_metric= KPI (e.g., Nin_kpi_acc) to be zero, and stop the monitoring window (T_window) 303.

For every time interval, if the monitoring window (T_window) 303 is not expired, in a second scenario, if the accumulated number of out-of-sync indication for LCM_metric= throughput (e.g., Nout_tput_acc) is larger than or equal to the predetermined accumulated number threshold for out-of-sync indication (e.g., Nout_tput) and the accumulated number of out-of-sync indication for LCM_metric= KPI (e.g., Nout_kpi_acc) is larger than or equal to the predetermined accumulated number threshold for out-of-sync indication (e.g., Nout_kpi), when the accumulated number of in-sync indication for LCM_metric= throughput (e.g., Nin_tput_acc) is larger than or equal to the predetermined accumulated number threshold for in-sync indication (e.g., Nin _tput) or the accumulated number of in-sync indication for LCM_metric= KPI (e.g., Nin_kpi_acc) is larger than or equal to the predetermined accumulated number threshold for in-sync indication (e.g., Nin_kpi), the UE may determine the ML Model in the normal status. The UE may reset the accumulated number of out-of-sync indication for LCM_metric= throughput (e.g., Nout_tput_acc) to be zero, the accumulated number of in-sync indication for LCM_metric= throughput (e.g., Nin_tput_acc) to be zero, the accumulated number of out-of-sync indication for LCM_metric= KPI (e.g., Nout_kpi_acc) to be zero, the accumulated number of in-sync indication for LCM_metric= KPI (e.g., Nin_kpi_acc) to be zero, and stop the monitoring window (T_window) 303. Otherwise, the UE may determine the ML Model in the failure status, and the UE may reset the accumulated number of out-of-sync indication for LCM_metric= throughput (e.g., Nout_tput_acc) to be zero, the accumulated number of in-sync indication for LCM_metric= throughput (e.g., Nin_tput_acc) to be zero, the accumulated number of out-of-sync indication for LCM_metric= KPI (e.g., Nout_kpi_acc) to be zero, the accumulated number of in-sync indication for LCM_metric= KPI (e.g., Nin_kpi_acc) to be zero, and stop the monitoring window (T_window) 303.

For every time interval, if the monitoring window (T_window) 303 is expired, when the accumulated number of out-of-sync indication for LCM_metric= throughput (e.g., Nout_tput_acc) is less than the predetermined accumulated number threshold for out-of-sync indication (e.g., Nout_tput) or the accumulated number of out-of-sync indication for LCM_metric= KPI (e.g., Nout_kpi_acc) is less than the predetermined accumulated number threshold for out-of-sync indication (e.g., Nout_kpi), the UE may determine the ML model in the normal status, the UE may reset the accumulated number of out-of-sync indication for LCM_metric= throughput (e.g., Nout_tput_acc) to be zero, the accumulated number of in-sync indication for LCM_metric= throughput (e.g., Nin_tput_acc) to be zero, the accumulated number of out-of-sync indication for LCM_metric= KPI (e.g., Nout_kpi_acc) to be zero, the accumulated number of in-sync indication for LCM_metric= KPI (e.g., Nin_kpi_acc) to be zero, and stop the monitoring window (T_window) 303.

In some examples, for ML functionality based/model ID based model monitoring on an applied AI/ML model, if the network entity configures *LCM_metric= tput+intermediate-KPI* or the *LCM_metric* is defined as *tput+intermediate-KPI* and the network entity configures DRX to the UE, the UE determines T_interval = *lcm(T_tput_interval,T_kpi_interval,* DRX_Cycle), where *lcm* means least common multiple. Then, the UE determines T_window = T_interval * max (ceiling (*T_tput_window*/*T_tput_interval),* ceiling (*T_kpi_window*/*T_kpi _interval),* ceiling (*T_tput_*window/DRX_Cycle), ceiling(*T_kpi_*window/DRX _Cycle)). In another implementation, the UE determines T_window = T_interval * T_interval * min (ceiling(*T_tput_window*/*T_tput_interval),* ceiling(*T_kpi _window*/*T_kpi _interval),* ceiling(*T_tput_window*/DRX _Cycle), ceiling(*T_kpi _window*/DRX_Cycle)).

In some examples, for ML functionality based/model ID based model monitoring on an applied AI/ML model, if the network entity configures *LCM_metric=tput+intermediate-KPI* or the *LCM_metric* is defined as *tput+intermediate-KPI* and the network entity configures cell DTX to the UE, the UE determines T_interval = *lcm(T_tput_interval,T_kpi_interval,* DTX_Cycle), which lcm means least common multiple. Then, the UE determines T_window = T_interval * max (ceiling (*T_tput_window*/*T_tput_interval),* ceiling (*T_kpi_window*/*T_kpi_interval),* ceiling (*T_put_window*/DTX_Cycle), ceiling (*T_kpi_*window/DTX_Cycle)). In another implementation, the UE determines T_window = T_interval * min (ceiling (*T_tput_window*/*T_tput_interval),* ceiling (*T_kpi_window*/*T_kpi _interval),*ceiling(*T_put_*window/DTX_Cycle), ceiling (*T_kpi_window*/DTX_Cycle)).

In some examples, for ML functionality based/model ID based model monitoring on an applied AI/ML model, if the network entity configures *LCM_metric= tput+intermediate-KPI* or the *LCM_metric* is defined as *tput+intermediate-KPI,* and the network entity configures cell DTX and DRX to the UE, the UE determines T_interval = *lcm(T_tput_interval,T_kpi _interval*,DTX_Cycle,DRX _Cycle), where lcm means least common multiple. Then, the UE determines T_window = T_interval * max (ceiling (*T_tput_window*/*T_tput_interval),* ceiling (*T_kpi_window*/*T_kpi_interval),* ceiling(*T_tput_*window/DTX _Cycle), ceiling (*T_kpi_window*/DTX_Cycle), ceiling (*T_tput_* window/DRX_Cycle), ceiling(*T_kpi_window*/DRX_Cycle)). In another implementation, the UE determines T_window = T_interval * min (ceiling (*T_tput_window*/*T_tput_interval),* ceiling (*T_kpi_window*/*T_kpi_interval),* ceiling (*T_tput_window*/DTX _Cycle), ceiling(*T_kpi _window*/DTX_Cycle), ceiling (*T_tput_window*/DRX_Cycle), ceiling(*T_kpi_window*/DRX_Cycle)).

In some examples, for ML functionality based/model ID based model monitoring on an applied AI/ML model, if the network entity configures *LCM_metric= tput+intermediate-KPI,* or the *LCM_metric* is defined as *tput+intermediate-KPI,* and the network entity configures cell DTX and DRX to the UE, and the network entity configures *Tcsi-rs* per-UE/per-FR MGRP, and T$_{SMTC}$ (SMTC period) to the UE, the UE determines T_interval = *lcm(T_tput_interval, T_kpi_interval*,DTX_Cycle, DRX _Cycle,Tcsi-rs, max(per-UE MGRP, per-FR MGRP), T$_{SMTC}$), where *lcm* means least common multiple. Then, the UE determines T_window = T_interval * max (ceiling (*T_tput_window*/*T_tput_interval),*ceiling(*T_kpi_window*/*T_kpi _interval),* ceiling (*T_tput_window*/DTX_Cycle), ceiling (*T_kpi_window*/DTX_Cycle), ceiling (*T_tput_window*/DRX_Cycle), ceiling (*T_kpi_window*/DRX_Cycle), ceiling (*T_tput_wiiadol*/*Tcsi-rs),* ceiling (*T_kpi_window*/*Tcsi-rs),* ceiling (*T_tput_window*/ max(per-UE MGRP, per-FR MGRP)), ceiling(*T_kpi_window*/ max(per-UE MGRP, per-FR MGRP)), ceiling(*T_tput_window*/T$_{SMTC}$),ceiling(*T_kpi_window*/T$_{SMTC}$)). In another example, the UE determines T_window = T_interval * min (ceiling (*T_tput_window*/*T_tput interval),* ceiling (*T_kpi_window*/*T_kpi interval),* ceiling (*T_tput_window*/DTX_Cycle), ceiling (*T_kpi_window*/DTX_Cycle), ceiling (*T_tput_window*/DRX_Cycle), ceiling (*T_kpi_window*/DRX Cycle), ceiling (*T_tput_window*/*Tcsi-rs),* ceiling(*T_kpi _window*/*Tcsi-rs),* ceiling (*T_tput_window*/ max (per-UE MGRP, per-FR MGRP)), ceiling (*T_kpi_window*/max(per-UE MGRP, per-FR MGRP)), ceiling (*T_tput_window*/T$_{SMTC}$), ceiling(*T_kpi_window*/T$_{SMTC}$)).

The LCM metric may be is a statistical-distance (e.g., LCM _metric=statistical-distance). In some examples, for ML functionality based/model ID based model monitoring on an applied AI/ML model, if the network entity configures *LCM_metric=statistical-distance* or the *LCM_metric* is defined as *statistical-distance,* the UE may first determine T_interval = *T_distance_interval* and determine T_window = *T_distance _window.* After receiving AI/ML functionality based/model ID based LCM configuration from the network entity, the UE may start to collect ML model input data (H for CSI , V for precoder/PMI, or W2) into monitoring dataset every T_interval. Then, the UE calculates statistical LCM_distance_metric every T_interval, e.g., by using the configured *Distance _metric=KL divergence/JS divergence / Wasserstein distance, {mean, variance} for monitoring dataset and the configured {Ref_distribution_mean, Ref_distribution_variance}.*

In one implementation, assuming that ML model input type is CSI H$_{mxn}$ with mxn MIMO matrix and assuming AI/ML model input type reference distribution is normalized complex gaussian distribution *CN(0,I$_k$)* with {*Ref_distribution_mean=0, Ref_distribution_variance= I$_k$*}, where k=mxn. Assume the monitoring_dataset is D$_{mxn}$={H$_{mxn\_1}$,H$_{mxn\_2}$,...H$_{mxn\_p}$} where H$_{mxn\_p}$ = (h$_1$,h$_{12}$,...,h$_{mn}$). The UE first calculates the mean u$_{mxn}$ and the variance C$_{mxn}$..

If *Distance _metric=KL divergence* is configured or predefined, the UE calculates statistical distance LCM

_distance _metric between the monitoring dataset and reference distribution by as follows.

$$\text{LCM\_distance\_metric}$$

$$= KLD(D_{mxn}|G_{mxn}) = [u_{mxn}^T u_{mxn} + trace\{C_{mxn}\} - k - \log|C_{mxn}|]$$

If Distance_metric=JS divergence is configured or predefined, the UE calculates statistical distance LCM_distance_metric between the monitoring_dataset and reference distribution by utilizing KL divergence as follows.

$$\text{LCM\_distance\_metric}$$
$$= JSD(D_{mxn}|G_{mxn}) = \frac{1}{2} * KLD\left(D_{mxn}\bigg|\frac{1}{2} * (D_{mxn} + G_{mxn})\right) + \frac{1}{2} * KLD\left(G_{mxn}\bigg|\frac{1}{2} * (D_{mxn} + G_{mxn})\right)$$

The UE may determine an initial value for the accumulated number of out-of-sync indication for LCM_metric=statistical-distance (Nout_distance_acc)=0, and the accumulated number of in-sync indication for LCM_metric= statistical-distance (Nin_distance_acc) =0. In one implementation, if the out-of-sync indication threshold for LCM_metric= statistical-distance (Qout_distance) and/or the in-sync indication threshold for LCM_metric= statistical-distance (Qin_distance) are not configured by the network entity, the UE determines Qout_distance and/or Qin_distance by a predefined value.

For every T_interval, if the data size of monitoring dataset is larger than or equal to a minimum dataset size for LCM_metric=statistical-distance *(Min_dataset_size_distance),* when the calculated LCM_distance_metric (e.g., LCM_metric=statistical-distance) is less than or equal to *Qout_distance,* the accumulated number of out-of-sync indication for LCM_metric=statistical-distance (Nout_distance_acc) is increased by 1; when the calculated LCM_distance_metric is larger than *Qin_distance,* the accumulated number of in-sync indication for LCM_metric= statistical-distance (Nin_distance_acc) is increased by 1. Otherwise, there is no action for Nout_distance_acc and Nin_distance_acc.

When the timer of the monitoring window (T_window) is not activated at the UE side, if the data size of monitoring dataset is larger than or equal to the *Min_dataset_size_distance* and the first LCM_distance_metric is less than or equal to *Qout_distance* are detected at the time instance T1, the UE activates the timer of the T_window at the UE side.

For every time interval, if the monitoring window (T_window) is not expired, in a first scenario, when the accumulated number of in-sync indication for LCM_metric= statistical-distance (e.g., Nin_disctance_acc) reaches a predetermined accumulated number threshold for in-sync indication (e.g., Nin_distance) is detected, the UE may determine the ML functionality/model in the normal status. The predetermined accumulated number threshold for in-sync indication may be a configured accumulated number of in-sync indication to determine ML functionality/model in the normal status, which may be configured by the network entity 104, or predefined. The UE may reset the accumulated number of out-of-sync indication for LCM_metric= statistical-distance (e.g., Nout_distance_acc) and the accumulated number of in-sync indication for LCM_metric= statistical-distance (e.g., Nin_distance_acc) to be zero, and stop the monitoring window (T_window).

For every time interval, if the monitoring window (T_window) 303 is not expired, in a second scenario, if the accumulated number of out-of-sync indication for LCM_metric= statistical-distance (e.g., Nout_distance_acc) is larger than or equal to a predetermined accumulated number threshold for out-of-sync indication (e.g., *Nout_distance),* then the UE may determine the status of the ML functionality/model based on the accumulated number of in-sync indication for LCM_metric= statistical-distance (e.g., Nin_distance_acc). The predetermined accumulated number threshold for out-of-sync indication may be a configured accumulated number of out-of-sync indication to determine ML functionality/model in a failure status, which may be configured by the network entity 104, or predefined. The predetermined accumulated number threshold for out-of-sync indication may be any integer larger than 1. When the accumulated number of in-sync indication for LCM_metric= statistical-distance (e.g., Nin_distance_acc) is larger than or equal to the predetermined accumulated number threshold for in-sync indication, the UE may determine the ML Model in the normal status. The UE may reset the accumulated number of out-of-sync indication for LCM_metric= statistical-distance (e.g., Nout_distance_acc) and the accumulated number of in-sync indication for LCM_metric= statistical-distance (e.g., Nin_distance_acc) to be zero, and stop the monitoring window (T_window). Otherwise (e.g., when the accumulated number of in-sync indication for LCM_metric= statistical-distance (e.g., Nin_distance_acc) is less than the predetermined accumulated number threshold for in-sync indication), the UE may determine the ML Model in the failure status, and the UE may reset the accumulated number of out-of-sync indication for LCM_metric= statistical-distance (e.g., Nout_distance_acc) and the accumulated number of in-sync indication for LCM_metric= statistical-distance (e.g., Nin_distance_acc) to be zero and stop the monitoring window (T_window).

For every time interval, if the monitoring window (T_window) 303 is expired, when the accumulated number of out-of-sync indication for LCM_metric= statistical-distance (e.g., Nout_distance_acc) is less than the predetermined accumulated number threshold for out-of-sync indication (e.g., Nout_distance), the UE may determine the ML Model in the normal status, the UE may reset the accumulated number of out-of-sync indication for LCM_metric= statistical-distance (e.g., Nout_distance_acc) and the accumulated number of in-sync indication for LCM_metric= throughput (e.g., Nin_distance_acc) to be zero.

In some examples, for ML functionality based/model ID based model monitoring on an applied AI/ML model, if the network entity configures *LCM_metric= statistical-distance* or the *LCM_metric* is defined as *statistical-distance* and the network entity configures DRX to the UE, the UE determines T_interval = *lcm*(*T_distance_interval*,DRX_Cycle), where lcm means least common multiple. Then, the UE determines T_window = T_interval * max (ceiling (*T_distance_window* /*T_distance_interval*), ceiling (*T_distance_window*/DRX_Cycle)). In another implementation, the UE determines T_window = T_interval * min (ceiling (*T_distance_window*/*T_distance_interval*), ceiling (*T_distance_window* / DRX_Cycle)).

In some examples, for ML functionality based/model ID based model monitoring on an applied AI/ML model, if the network entity configures *LCM_metric= statistical-distance* or the *LCM_metric* is defined as *statistical-distance* and the network entity configures cell DTX to the UE, the UE determines T_interval = *lcm*(*T_distance_interval*,DTX_Cycle), where lcm means least common multiple. Then, the UE determines T_window = T_interval * max (ceiling (*T_distance_window* /*T_distance_interval*), ceiling (*T_distance_window*/DTX_Cycle)). In another implementation, the UE determines T_window = T_interval * min (ceiling (*T_distance_window* /*T_distance_interval*), ceiling (*T_distance_window* /DTX _Cycle)).

In some examples, for ML functionality based/model ID based model monitoring on an applied AI/ML model, if the network entity configures *LCM_metric= statistical-distance* or the *LCM_metric* is defined as *statistical-distance,* and the network entity configures cell DTX and DRX to the UE, the UE determines T_interval = *lcm*(*T_distance_interval,* DTX_Cycle,DRX_Cycle), where lcm means least common multiple. Then, the UE determines T_window = T_interval * max ( ceiling (*T_distance_window*/*T_distance_interval*), ceiling (*T_distance_window* /DTX_Cycle),c eiling(*T_distance_window*/ DRX_Cycle)). In another implementation, the UE determines T_window = T_interval * min (ceiling (*T_distance_window*/*T_distance_interval*), ceiling (*T_distance_window* /DTX_Cycle),ceiling(*T_distance_window*/DRX_Cycle))*.*

In some examples, for ML functionality based/model ID based model monitoring on an applied AI/ML model, if the network entity configures *LCM_metric= statistical-distance,* or the *LCM_metric* is defined as *statistical-distance,* and the network entity configures cell DTX and DRX to the UE, and the network entity configures T*csi-rs* per-UE/per-FR MGRP, and T$_{SMTC}$ (SMTC period) to the UE, the UE determines T_interval = *lcm*(*T_distance_interval,*DTX_Cycle,DRX_Cycle, T*csi-*rs,max(per-UE MGRP,per-FR MGRP), T$_{SMTC}$), which *lcm* means least common multiple. Then, the UE determines T_window = T_interval * max (ceiling (*T _distance_window*/*T_distance_interval*), ceiling (*T_distance_window* /DTX _Cycle), ceiling (*T_distance_window*/ DRX_Cycle), ceiling (*T_distance_window*/T*csi-rs*), ceiling (*T_distance_window*/-max(per-UE MGRP, per-FR MGRP)), ceiling(*T_distance_window*/T$_{SMTC}$))*.* In another implementation, the UE determines T_window = T_interval * min (ceiling (*T_distance_window*/*T_distance_interval*), ceiling (*T_distance_window* /DTX_Cycle), ceiling (*T_distance_window*/ DRX_Cycle), ceiling (*T_distance_window*/T*csi-rs*), ceiling (*T_distance_window*/max(per-UE MGRP, per-FR MGRP)), ceiling (*T_distance_window*/T$_{SMTC}$))*.*

The LCM metric may be a combination of the throughput, the intermediate KPI, or the statistical distance. In some examples, for ML functionality based/model-ID based model monitoring on an applied AI/ML model, the UE 102 can use any combination of the throughput, the intermediate KPI, or the statistical distance to determine whether the monitored ML functionality and/or ML functionality ID(s) and/or ML model ID(s) are in the normal or failure status. Then, the UE 102 can determine whether to send ML functionality/model failure for CSI enhancement to the network entity 104.

Referring back to FIG. 2, in some examples, for the indication of the status change of the ML functionality/model ID for CSI enhancement, the network entity 104 may configure at least one CSI-RS(s) for each configured functionality and/or configured functionality ID(s) and/or configured model ID(s) in transmitting the control signaling 206 or transmitting the second control signaling 210. The UE 102 performs 212 ML functionality-based/model-ID-based model monitoring on each configured functionality and/or configured functionality ID(s) and/or configured model ID(s). The UE determines whether any of or a subset of or all the configured functionality and/or configured functionality ID(s) and/or configured model ID(s) are in the failure status or in the normal status. The UE 102 sends 214 the indication of the status change of the ML functionality/model, e.g., a periodic, aperiodic, semi-persistent, and/or event-triggered ML functionality/model status change indication, including failure functionality and/or functionality ID(s) and/or model ID(s), to the network entity 104. The UE 102 may send 214 the indication of the status change of the ML functionality/model by RRC signaling, or MAC-CE, or UCI in PUCCH or PUSCH, or PRACH.

In some implementations, the UE transmits 214 the indication of the status change of the ML functionality model indicating the status change for at least one ML functionality/model, where the status change may include at least one of the following: at least one ML functionality/model from a normal status to a failure status, or at least one ML functionality/model from the failure status to the normal status. The network entity 104 receives 214 the indication of the status change of the ML functionality/model indicating the status change for at least one ML functionality/model.

In some examples, the UE performs 212 the ML functionality/model ID based model monitoring based on single functionality. In some implementations, the network entity configures one functionality to the UE for monitoring of ML based CSI compression or CSI prediction. The UE performs ML functionality based/model ID based model monitoring on all applied ML model(s) with this functionality. If all the monitored ML model(s) are determined in the failure status, the UE sends 214 ML functionality failure indication with the failure functionality to the network entity by RRC signaling, or MAC-CE, or UCI in PUCCH or PUSCH, or PRACH.

In some other implementations, the network entity configures one functionality ID to the UE for monitoring of ML based CSI compression or CSI prediction, and the UE performs ML functionality based/model ID based model monitoring on all applied ML model(s) with this functionality ID. If all the monitored ML model(s) are determined in the failure status, the UE sends 214 ML functionality failure indication with the failure functionality ID to the network entity by RRC signaling, or MAC-CE, or UCI in PUCCH or PUSCH, or PRACH.

In some other implementations, the network entity configures only one functionality ID and corresponding ML model ID(s) to the UE for monitoring of ML based CSI compression or CSI prediction, and the UE performs ML functionality based/model ID based model monitoring on all configured AI/ML model(s). If all monitored ML model(s) are determined in the failure status, the UE sends 214 ML functionality failure indication with the associated functionality ID and/or model ID(s) to the network entity by RRC signaling, or MAC-CE or UCI in PUCCH or PUSCH, or PRACH. If any of monitored AI/ML model(s) are determined in the failure status, the UE sends 214 ML model failure indication with the associated functionality ID and model ID(s) to the network entity by RRC signaling, or MAC-CE or UCI in PUCCH or PUSCH, or PRACH.

In some implementations, the UE sends 214 the ML functionality failure indication for a functionality if the UE detects all the models corresponding to the functionality fail. In some other implementations, the UE sends 214 the ML functionality failure indication for a functionality if the UE detects the activated models corresponding to the functionality fail. In some other implementations, the UE sends 214 the ML functionality failure indication for a functionality if the UE detects the one of the activated models corresponding to the functionality fails.

In some implementations, the UE may transmit 214 at least one of the following in the indication of the status change of the ML functionality/model to the network entity: an indication of a status change from a normal status to a failure status of one AI/ML functionality, an indication of the status change from the normal status to the failure status of one of the activated models, an indication of whether a candidate model is identified, and/or a detected candidate model ID(s) from a list of pre-defined, or configured, or UE reported model ID(s) for the ML functionality.

In some examples, the UE performs 212 the ML functionality/model ID based model monitoring based on multiple functionalities. In some implementations, the network entity 104 configures multiple functionality ID(s) to the UE, and the UE performs 212 the ML functionality based/model ID based model monitoring on all configured ML functionality ID(s) with each corresponding applied ML model(s). If any of or a subset of or all the monitored ML functionality ID(s) are determined in the failure status, the UE sends 214 an ML functionality failure indication with the failure functionality ID(s) to the network entity by RRC signaling, or MAC-CE or UCI in PUCCH or PRACH.

In some implementations, the network entity configures multiple functionality ID(s) and each corresponding AI/ML model ID(s) to the UE, and the UE performs 214 the ML functionality based/model ID based model monitoring on all configured AI/ML functionality ID(s) with each corresponding applied ML model(s). If any of all monitored ML functionality ID(s) and/or ML model ID(s) is determined in the failure status, the UE sends 214 the ML functionality failure indication with the failure functionality ID(s) and model ID(s) to the network entity by RRC signaling, or MAC-CE, or UCI in PUCCH or PUSCH, or PRACH.

In some implementations, the UE 102 sends 214 the ML functionality failure indication if the UE detects all the functionalities fail. In some other implementations, the UE sends 214 the ML functionality failure indication if the UE detects one or a subset of functionalities fail.

In some implementations, the UE 102 may transmit 214 at least one of the following in the indication of the status change of the ML functionality/model to the network entity: an indication of a status change from a normal status to a failure status of one or more than one ML functionality, an indication of the status change from the normal status to the failure status of one of the activated models for one ML functionality, an indication of whether a candidate model is identified for the failed ML functionality, and/or detected candidate model ID(s) for failed ML functionality.

In some examples, the UE 102 performs 212 the ML functionality/model ID based model monitoring based on per-model monitoring. In some implementations, the network entity 104 configures or activates one or multiple model ID(s) to the UE, the UE 102 performs 212 ML functionality based/model ID based model monitoring on all configured ML model ID(s). If any of or all monitored ML model ID(s) is determined in the failure status, the UE sends 214 the ML model failure indication with the failure model ID(s) to the network entity by RRC signaling, or MAC-CE, or UCI in PUCCH or PUSCH, or PRACH.

In some implementations, the UE may transmit at least one of the following in the indication of the status change of the ML functionality/model to the network entity: an indication of a status change from the normal status to the failure status of one configured or activated model, an indication of whether a candidate model is identified, and/or detected candidate model ID(s).

As illustrated in FIG. 2, after receiving the indication of the status change of the ML functionality/model for CSI enhancement, the network entity 104 may determine 216 whether to configure an ML functionality/model de-activation, switching, and/or a fallback to the UE.

If the network entity 104 configures only one functionality ID or one model-ID to the UE, the network entity 104 may configure the ML functionality/model de-activation or ML fallback to the UE. The network entity may transmit 218 another control signaling indicating the ML functionality/model de-activation or ML fallback for CSI enhancement.

If the network entity 104 configures multiple functionality ID(s) and/or model ID(s) to the UE and not all functionality ID(s) and/or model ID(s) are reported in the failure status, the network entity may configure the ML functionality/model switching with functionality ID(s) and/or model ID(s) in the normal status to the UE. The network entity may transmit 218 another control signaling indicating the ML functionality/model switching with functionality ID(s) and/or model ID(s) of the ML functionality/model(s) in the normal status, such that the UE may switch to the ML functionality/model(s) in the normal status.

If the network entity 104 configures multiple functionality ID(s) and/or model ID(s) to the UE and not all functionality ID(s) and/or model ID(s) are reported in failure status, the network entity may configure the ML functionality/model de-activation, or ML fallback to the UE. When the UE is configured by the ML functionality de-activation, switching, and/or fallback, the UE may still perform 212 the ML functionality based/model ID based model monitoring on the previous configured functionality ID(s) and/or ML model ID(s).

If the UE determines at least one ML model and/or at least one ML functionality in the normal status, the UE may send 220 an ML functionality/model activation request for CSI enhancement with functionality ID and/or model ID(s) of the ML functionality/model(s) in the normal status to the network entity. Then, the network entity 104 may perform 208 the ML functionality/model activation for CSI enhancement with the reported functionality ID and/or model ID(s) to the UE.

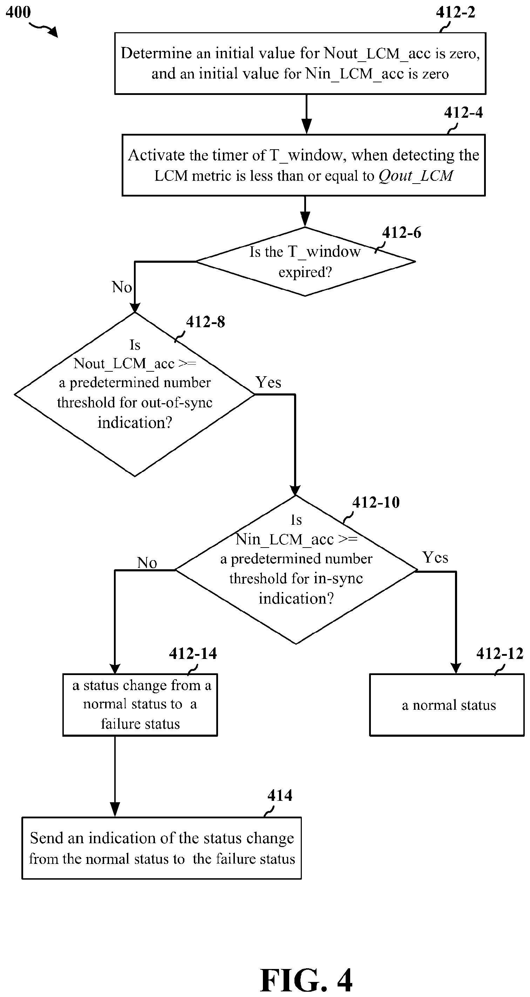

FIG. 4 illustrates a diagram 400 of an example of sending an indication indicating a status change from a normal status to a failure status according to an embodiments. The UE may determine 412-2 an initial value for the accumulated number of out-of-sync indication for an LCM_metric (e.g., Nout_LCM_acc) is zero, and an initial value for the accumulated number of in-sync indication for LCM_metric (e.g., Nin_LCM_acc) is zero at the UE side. In one example, if the out-of-sync indication threshold for LCM metric (*e.g., Qout_LCM*) and/or the in-sync indication threshold for LCM metric (*e.g., Qin_LCM)* are not configured by the network entity, the UE may determine the out-of-sync indication threshold for the LCM metric and/or the in-sync indication threshold for LCM metric by a predefined value or by hypothetical BLER based on at least one CSI-RS resource and/or on at least one synchronization signal block (SSB).

For every time interval, if the calculated LCM metric is less than or equal to the out-of-sync indication threshold (*e.g., Qout_LCM)* for the LCM metric, then the accumulated number of out-of-sync indication (e.g., Nout_LCM_acc) is increased by 1. If the calculated LCM metric is larger than the in-sync indication threshold (*e.g., Qin_LCM)* for the LCM metric, then the accumulated number of in-sync indication for the LCM metric (e.g., Nin_LCM_acc) is increased by 1.

When the timer of the monitoring window (T_window) is not activated at the UE side and the first LCM metric is less than or equal to the out-of-sync indication threshold for the LCM_metric (*e.g., Qout_LCM)* is detected at the time instance T1, the UE activates 412-4 the timer of the monitoring window (T_window) at the UE side. The UE may still monitor the LCM when the timer of the monitoring window (T_window) is not activated.

The UE may determine 412-6 whether the monitoring window (T_window) is expired. If the monitoring window (T_window) is not expired, the UE determines 412-8 whether the accumulated number of out-of-sync indication for the LCM metric (e.g., Nout_LCM_acc) is larger than or equal to a predetermined accumulated number threshold for out-of-sync indication for the LCM metric (e.g., Nout_LCM). If the accumulated number of out-of-sync indication (e.g., Nout_LCM_acc) is larger than or equal to the predetermined accumulated number threshold for out-of-sync indication (e.g., Nout_LCM), then the UE may determine 412-10 whether the accumulated number of in-sync indication for the LCM metric (e.g., Nin_LCM_acc) is larger than or equal to a predetermined accumulated number threshold for in-sync indication for the LCM metric (e.g., Nin_LCM). If the accumulated number of in-sync indication for the LCM metric (e.g., Nin_LCM_acc) is larger than or equal to the predetermined accumulated number threshold for in-sync indication (e.g., Nin_LCM), the UE may determine 412-12 the ML functionality/model in a normal status. If the the accumulated number of in-sync indication for the LCM metric (e.g., Nin_LCM_acc) is less than the predetermined accumulated number threshold for in-sync indication, the UE may determine 412-14 the ML functionality/model in a failure status, and therefore the UE may determine 412-14 a status change of the ML functionality/model from the normal status to the failure status. Then, the UE sends 414, to the network entity, an indication of the status change of the ML functionality or the ML model for CSI enhancement from the normal status to the failure status. The predetermined accumulated number threshold for in-sync indication may be a configured accumulated number of in-sync indication for the LCM metric to determine the ML functionality/model in the normal status (e.g., Nin_LCM), which may be configured by the network entity 104, or predefined. The predetermined accumulated number threshold for in-sync indication may be any integer larger than 1. The predetermined accumulated number threshold for out-of-sync indication for the LCM metric may be a configured accumulated number of out-of-sync indication to determine the ML functionality/model in the failure status (e.g., Nout_LCM), which may be configured by the network entity 104, or predefined. The predetermined accumulated number threshold for out-of-sync indication may be any integer larger than 1.

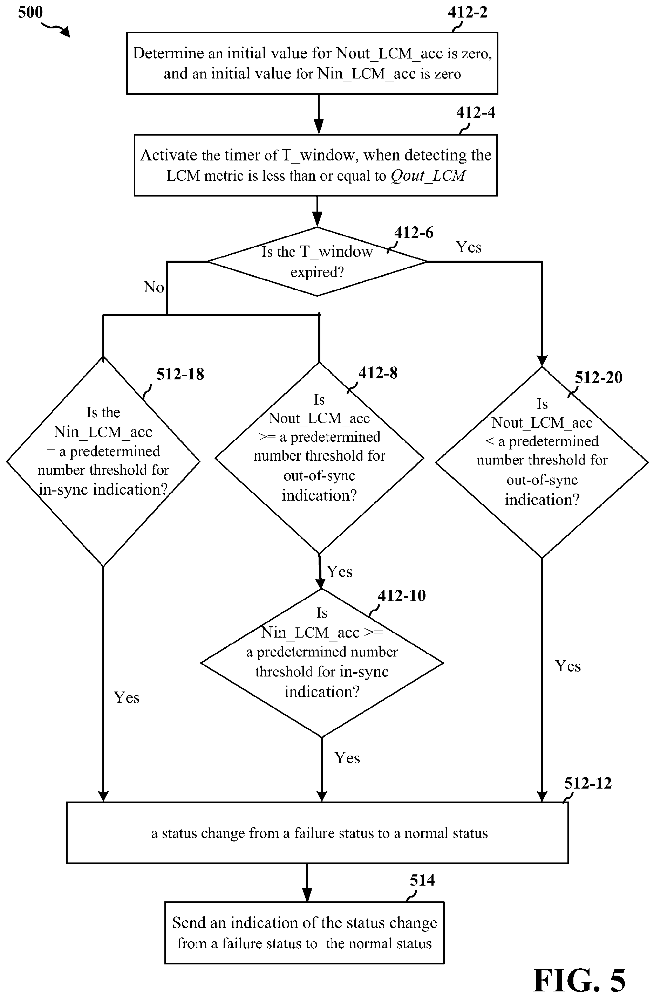

FIG. 5 illustrates a diagram 500 of an example of sending an indication indicating a status change from a failure status to a normal status according to an embodiments. The UE may determine 412-2 an initial value for the accumulated number of out-of-sync indication for an LCM_metric (e.g., Nout_LCM_acc) is zero, and an initial value for the accumulated number of in-sync indication for LCM_metric (e.g., Nin_LCM_acc) is zero at the UE side.

When the timer of the monitoring window (T_window) is not activated at the UE side and the first LCM metric is less than or equal to the out-of-sync indication threshold for the LCM_metric (*e.g., Qout_LCM)* is detected at the time instance T1 311, the UE activates 412-4 the timer of the monitoring window (T_window) at the UE side. The UE may still monitor the LCM when the timer of the monitoring window (T_window) 303 is not activated.

For every time interval, the UE determines 412-6 if the monitoring window (T_window) is expired. If the monitoring window (T_window) is not expired, the UE determines 512-18 whether the accumulated number of in-sync indication for the LCM metric (e.g., Nin_LCM_acc) reaches a predetermined accumulated number threshold for in-sync indication for the LCM metric (e.g., Nin_LCM). If the Nin_LCM_acc reaches the predetermined accumulated number threshold for in-sync indication, the UE may determine 512-12 the ML functionality/model in a normal status.

If the monitoring window (T_window) is not expired, the UE determines 412-8 whether the accumulated number of out-of-sync indication for the LCM metric (e.g., Nout_LCM_acc) is larger than or equal to a predetermined accumulated number threshold for out-of-sync indication for the LCM metric (e.g., Nout_LCM). If the Nout_LCM_acc is larger than or equal to the predetermined accumulated number threshold for out-of-sync indication, then the UE may determine 412-10 whether the accumulated number of in-sync indication for the LCM metric (e.g., Nin_LCM_acc) is larger than or equal to the predetermined accumulated number threshold for in-sync indication for the LCM metric (e.g., Nin_LCM). If the accumulated number of in-sync indication for the LCM metric (e.g., Nin_LCM_acc) is larger than or equal to the predetermined accumulated number threshold for in-sync indication for the LCM metric (e.g., Nin_LCM), the UE may determine 512-12 the ML functionality/ model in the normal status.

For every time interval, if the monitoring window (T_window) is expired, the UE may determine 512-20 whether the accumulated number of out-of-sync indication for the LCM metric (e.g., Nout_LCM_acc) is less than the predetermined accumulated number threshold for out-of-sync indication for the LCM metric (e.g., Nout_LCM). If the Nout_LCM_acc is less than the predetermined accumulated number threshold for out-of-sync indication, the UE may determine 512-12 the ML functionality/model in the normal status, and therefore the UE may determine 512-12 a status change of the ML functionality/model from a failure status to the normal status.

Then, the UE sends 514, to the network entity, an indication of the status change of the ML functionality or the ML model for CSI enhancement from a failure status to the normal status.

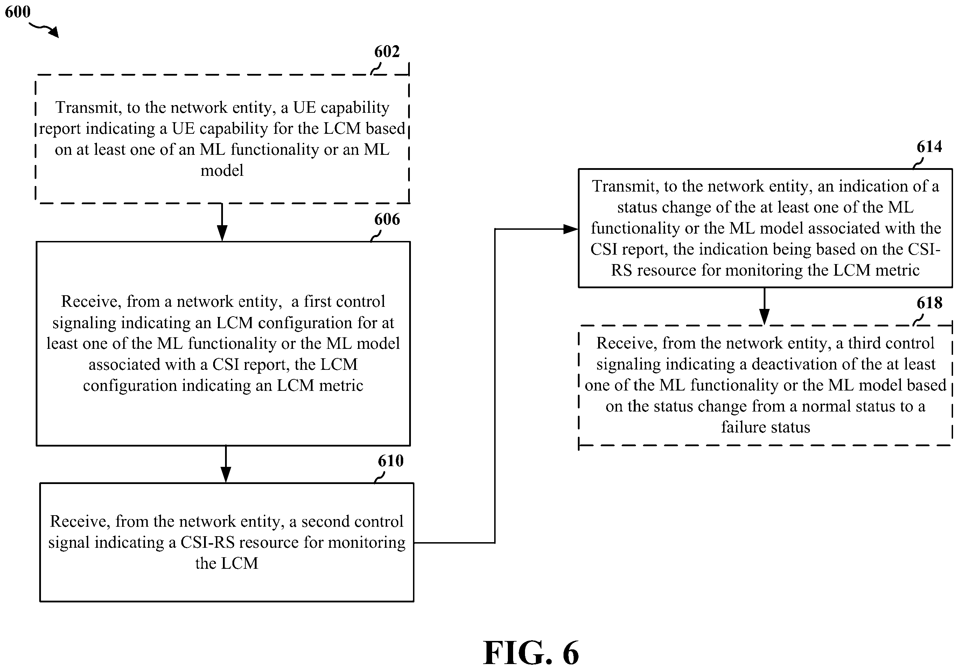

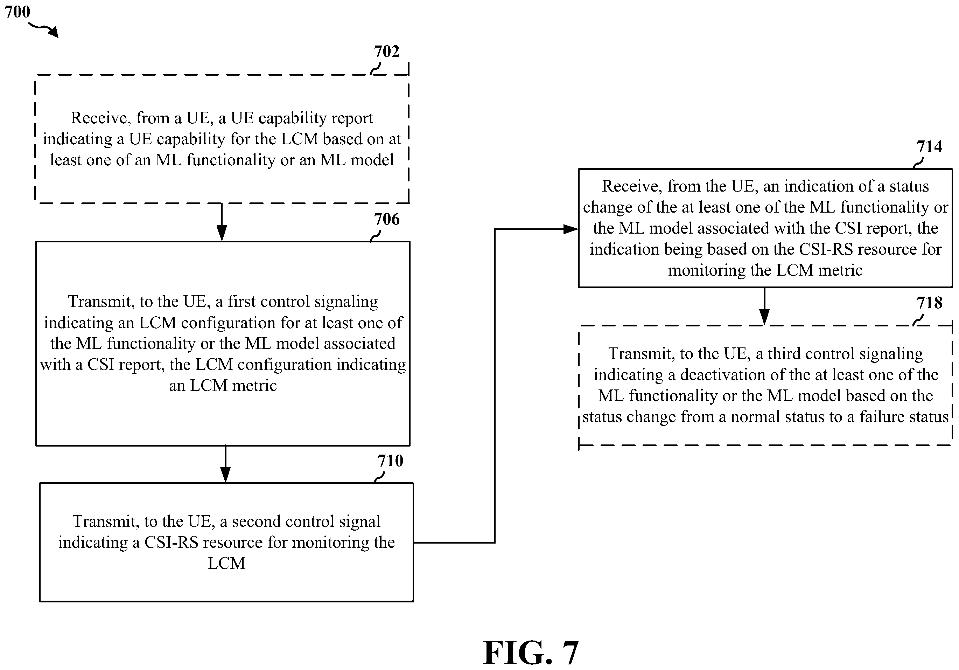

FIGs. 2-5 illustrate LCM on ML for CSI feedback enhancement. FIGs. 6-7 show methods for implementing one or more aspects of FIGs. 2-5. In particular, FIG. 6 shows an implementation by the UE 102 of the one or more aspects of FIGs. 2-5. FIG. 7 shows an implementation by the network entity 104 of the one or more aspects of FIGs. 2-5.

FIG. 6 illustrates a flowchart 600 of a method of wireless communication at a UE. With reference to FIGs. 1-5, the method may be performed by the UE 102. In embodiments, the UE 102 may transmit 602, to the network entity, a UE capability report indicating a UE capability for the LCM based on at least one of an ML functionality or an ML model. For example, referring to FIG. 2, the UE 102 may transmit 202 a UE capability signaling to the network entity 104 indicating a UE capability of an ML based LCM for CSI feedback enhancement.

The UE 102 receives 606, from the network entity 104, a first control signaling indicating an LCM configuration for at least one of the ML functionality or the ML model associated with a CSI report. The LCM configuration indicates an LCM metric. For example, referring to FIG. 2, the UE 102 receives 206 the control signaling indicating the LCM configuration for at least one of the ML functionality or the ML model associated with the CSI report.

The UE 102 receives 610, from the network entity 104, a second control signal indicating at least one CSI-RS resource for monitoring the LCM. For example, referring to FIG. 2, the UE 102 receives 210 the second control signaling indicating the at least one CSI-RS resource and/or a DL-MIMO transmission resource.

The UE 102 transmits 614, to the network entity 104, an indication of a status change of the at least one of the ML functionality or the ML model associated with the CSI report. The indication is based on the CSI-RS resource for monitoring the LCM metric. For example, referring to FIG. 2, the UE 102 sends 214 the indication of the status change of the ML functionality/model, e.g., a periodic, aperiodic, semi-persistent, and/or event-triggered ML functionality/model status change indication, including failure functionality and/or functionality ID(s) and/or model ID(s), to the network entity 104.

The UE 102 receives 618, from the network entity 104, a third control signaling indicating a deactivation of the at least one of the ML functionality or the ML model based on the status change from a normal status to a failure status. For example, referring to FIG. 2, the UE 102 may receive 218 the control signaling indicating ML functionality de-activation, switching, or fallback to the UE 102. FIG. 6 describes a method from a UE-side of a wireless communication link, whereas

**EP 4 578 216 B1**

FIG. 7 describes a method from a network-side of the wireless communication link.

FIG. 7 is a flowchart 700 of a method of wireless communication at a network entity. With reference to FIGs. 1-5, the method may be performed by one or more network entities 104, which may correspond to a base station or a unit of the base station, such as the RU 106, the DU 108, and/or the CU 110. In embodiments, the network entity 104 may receive 702, from a UE, a UE capability report indicating a UE capability for the LCM based on at least one of an ML functionality or an ML model. For example, referring to FIG. 2, the network entity 104 may receive 202 the UE capability signaling from the UE 102 indicating the UE capability of the ML based LCM for CSI feedback enhancement.

The network entity 104 transmits 706, to the UE, a first control signaling indicating an LCM configuration for at least one of the ML functionality or the ML model associated with a CSI report. The LCM configuration indicating an LCM metric. For example, referring to FIG. 2, the network entity 104 transmits 206 a control signaling indicating an ML functionality or an ML model based LCM configuration for CSI enhancement to the UE.

The network entity 104 transmits 710, to the UE, a second control signal indicating at least one CSI-RS resource for monitoring the LCM. For example, referring to FIG. 2, the network entity 104 transmits 210 the second control signaling indicating the at least one CSI-RS resource and/or a DL-MIMO transmission resource.

The network entity 104 receives 714, from the UE, an indication of a status change of the at least one of the ML functionality or the ML model associated with the CSI report. The indication is based on the CSI-RS resource for monitoring the LCM metric. For example, referring to FIG. 2, the network entity 104 receives 214 the indication of the status change of the ML functionality/model indicating the status change for at least one ML functionality/model.

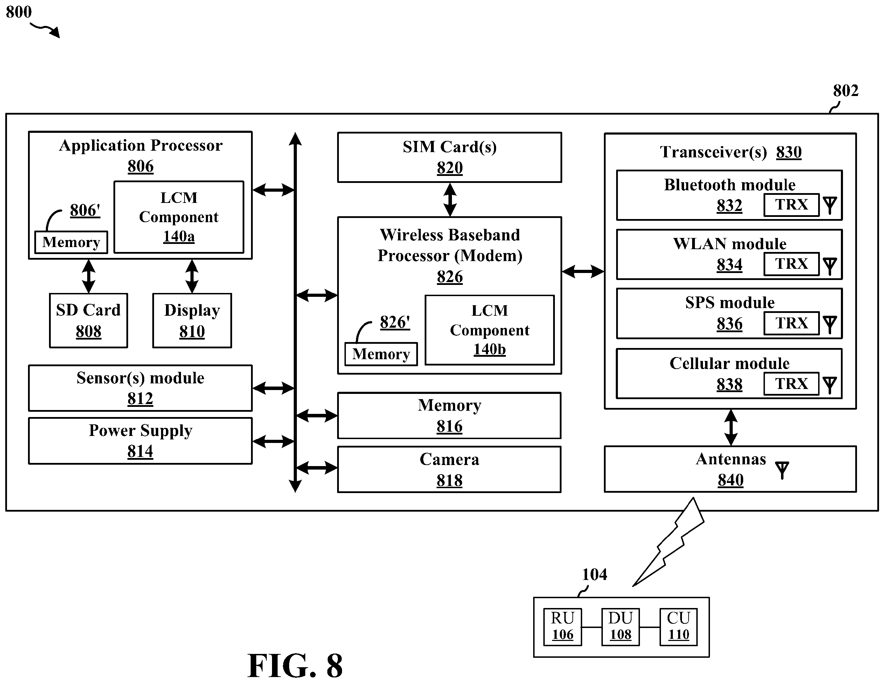

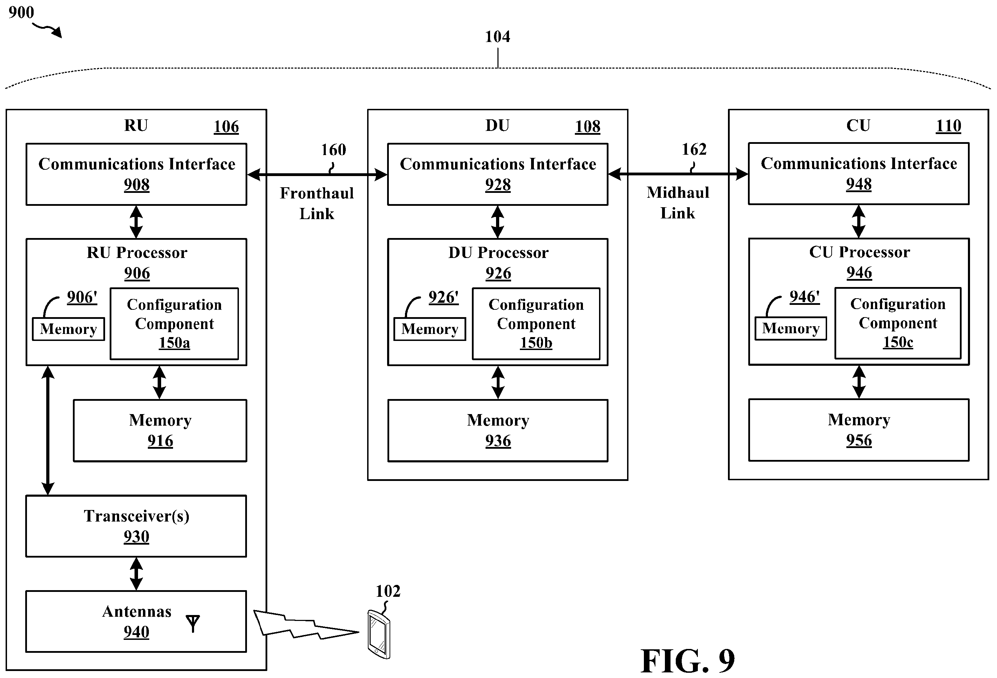

The network entity 104 may transmit 718, to the UE, a third control signaling indicating a deactivation of the at least one of the ML functionality or the ML model based on the status change from a normal status to a failure status. For example, referring to FIG. 2, the network entity 104 may transmit 218 a control signaling indicating ML functionality de-activation, switching, or fallback to the UE 102. A UE apparatus 802, as described in FIG. 8, may perform the method of flowchart 600. The one or more network entities 104, as described in FIG. 9, may perform the method of flowchart 700.

FIG. 8 is a diagram 800 illustrating an example of a hardware implementation for a UE apparatus 802. The UE apparatus 802 may be the UE 102, a component of the UE 102, or may implement UE functionality. The UE apparatus 802 may include an application processor 806, which may have on-chip memory 806'. In examples, the application processor 806 may be coupled to a secure digital (SD) card 808 and/or a display 810. The application processor 806 may also be coupled to a sensor(s) module 812, a power supply 814, an additional module of memory 816, a camera 818, and/or other related components.

The UE apparatus 802 may further include a wireless baseband processor 826, which may be referred to as a modem. The wireless baseband processor 826 may have on-chip memory 826'. Along with, and similar to, the application processor 806, the wireless baseband processor 826 may also be coupled to the sensor(s) module 812, the power supply 814, the additional module of memory 816, the camera 818, and/or other related components. The wireless baseband processor 826 may be additionally coupled to one or more subscriber identity module (SIM) card(s) 820 and/or one or more transceivers 830 (e.g., wireless RF transceivers).

Within the one or more transceivers 830, the UE apparatus 802 may include a Bluetooth module 832, a WLAN module 834, an SPS module 836 (e.g., GNSS module), and/or a cellular module 838. The Bluetooth module 832, the WLAN module 834, the SPS module 836, and the cellular module 838 may each include an on-chip transceiver (TRX), or in some cases, just a transmitter (TX) or just a receiver (RX). The Bluetooth module 832, the WLAN module 834, the SPS module 836, and the cellular module 838 may each include dedicated antennas and/or utilize antennas 840 for communication with one or more other nodes. For example, the UE apparatus 802 can communicate through the transceiver(s) 830 via the antennas 840 with another UE (e.g., sidelink communication) and/or with a network entity 104 (e.g., uplink/downlink communication), where the network entity 104 may correspond to a base station or a unit of the base station, such as the RU 106, the DU 108, or the CU 110.

The wireless baseband processor 826 and the application processor 806 may each include a computer-readable medium / memory 826', 806', respectively. The additional module of memory 816 may also be considered a computer-readable medium / memory. Each computer-readable medium / memory 826', 806', 816 may be non-transitory. The wireless baseband processor 826 and the application processor 806 may each be responsible for general processing, including execution of software stored on the computer-readable medium / memory 826', 806', 816. The software, when executed by the wireless baseband processor 826 / application processor 806, causes the wireless baseband processor 826 / application processor 806 to perform the various functions described herein. The computer-readable medium / memory may also be used for storing data that is manipulated by the wireless baseband processor 826 / application processor 806 when executing the software. The wireless baseband processor 826 / application processor 806 may be a component of the UE 102. The UE apparatus 802 may be a processor chip (e.g., modem and/or application) and include just the wireless baseband processor 826 and/or the application processor 806. In other examples, the UE apparatus 802 may be the entire UE 102 and include the additional modules of the apparatus 802.

As discussed in FIG. 1 and implemented with respect to FIG. 6, the LCM component 140 is configured to receive, from a network entity, a first control signaling indicating an LCM configuration for at least one of an ML functionality or an ML model associated with a CSI report. The LCM configuration indicates an LCM metric. The LCM component 140 is configured to receive, from the network entity, a second control signaling indicating at least one CSI-RS resource for monitoring the LCM metric. The LCM component 140 is configured to transmit, to the network entity, an indication of a status change of the at least one of the ML functionality or the ML model associated with the CSI report. The indication is based on the at least one CSI-RS resource for monitoring the LCM metric. The LCM component 140 may be within the application processor 806 (e.g., at 140a), the wireless baseband processor 826 (e.g., at 140b), or both the application processor 806 and the wireless baseband processor 826. The LCM component 140a-140b may be one or more hardware components specifically configured to carry out the stated processes/algorithm, implemented by one or more processors configured to perform the stated processes/algorithm, stored within a computer-readable medium for implementation by the one or more processors, or a combination thereof.

FIG. 9 is a diagram 900 illustrating an example of a hardware implementation for one or more network entities 104. The one or more network entities 104 may be a base station, a component of a base station, or may implement base station functionality. The one or more network entities 104 may include, or may correspond to, at least one of the RU 106, the DU, 108, or the CU 110. The CU 110 may include a CU processor 946, which may have on-chip memory 946'. In some aspects, the CU 110 may further include an additional module of memory 956 and/or a communications interface 948, both of which may be coupled to the CU processor 946. The CU 110 can communicate with the DU 108 through a midhaul link 162, such as an F1 interface between the communications interface 948 of the CU 110 and a communications interface 928 of the DU 108.

The DU 108 may include a DU processor 926, which may have on-chip memory 926'. In some aspects, the DU 108 may further include an additional module of memory 936 and/or the communications interface 928, both of which may be coupled to the DU processor 926. The DU 108 can communicate with the RU 106 through a fronthaul link 160 between the communications interface 928 of the DU 108 and a communications interface 908 of the RU 106.

The RU 106 may include an RU processor 906, which may have on-chip memory 906'. In some aspects, the RU 106 may further include an additional module of memory 916, the communications interface 908, and one or more transceivers 930, all of which may be coupled to the RU processor 906. The RU 106 may further include antennas 940, which may be coupled to the one or more transceivers 930, such that the RU 106 can communicate through the one or more transceivers 930 via the antennas 940 with the UE 102.

The on-chip memory 906', 926', 946' and the additional modules of memory 916, 936, 956 may each be considered a computer-readable medium / memory. Each computer-readable medium / memory may be non-transitory. Each of the processors 906, 926, 946 is responsible for general processing, including execution of software stored on the computer-readable medium / memory. The software, when executed by the corresponding processor(s) 906, 926, 946 causes the processor(s) 906, 926, 946 to perform the various functions described herein. The computer-readable medium / memory may also be used for storing data that is manipulated by the processor(s) 906, 926, 946 when executing the software. In examples, the configuration component 150 may sit at any of the one or more network entities 104, such as at the CU 110; both the CU 110 and the DU 108; each of the CU 110, the DU 108, and the RU 106; the DU 108; both the DU 108 and the RU 106; or the RU 106.

As discussed in FIG. 1 and implemented with respect to FIG. 7, the configuration component 150 is configured to transmit, to a UE, a first control signaling indicating an LCM configuration for at least one of an ML functionality or an ML model associated with a CSI report. The LCM configuration indicates an LCM metric. The configuration component 150 is configured to transmit, to the UE, a second control signaling indicating at least one CSI-RS resource for monitoring the LCM metric. The configuration component 150 is configured to receive, from the UE, an indication of a status change of the at least one of the ML functionality or the ML model associated with the CSI report. The indication is based on the at least one CSI-RS resource for monitoring the LCM metric. The configuration component 150 may be within one or more processors of the one or more network entities 104, such as the RU processor 906 (e.g., at 150a), the DU processor 926 (e.g., at 150b), and/or the CU processor 946 (e.g., at 150c). The configuration component 150a-150c may be one or more hardware components specifically configured to carry out the stated processes/algorithm, implemented by one or more processors 906, 926, 946 configured to perform the stated processes/algorithm, stored within a computer-readable medium for implementation by the one or more processors 906, 926, 946, or a combination thereof.

The specific order or hierarchy of blocks in the processes and flowcharts disclosed herein is an illustration of example approaches. Hence, the specific order or hierarchy of blocks in the processes and flowcharts may be rearranged. Some blocks may also be combined or deleted. Dashed lines may indicate optional elements of the diagrams. The accompanying method claims present elements of the various blocks in an example order, and are not limited to the specific order or hierarchy presented in the claims, processes, and flowcharts.

The detailed description set forth herein describes various configurations in connection with the drawings and does not represent the only configurations in which the concepts described herein may be practiced. The detailed description includes specific details for the purpose of providing a thorough explanation of various concepts. However, these concepts may be practiced without these specific details. In some instances, well known structures and components are shown in block diagram form in order to avoid obscuring such concepts.

Aspects of wireless communication systems, such as telecommunication systems, are presented with reference to various apparatuses and methods. These apparatuses and methods are described in the following detailed description and are illustrated in the accompanying drawings by various blocks, components, circuits, processes, call flows, systems, algorithms, etc. (collectively referred to as "elements"). These elements may be implemented using electronic hardware, computer software, or combinations thereof. Whether such elements are implemented as hardware or software depends upon the particular application and design constraints imposed on the overall system.

An element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems-on-chip (SoC), baseband processors, field programmable gate arrays (FPGAs), programmable logic devices (PLDs), state machines, gated logic, discrete hardware circuits, and other similar hardware configured to perform the various functionality described throughout this disclosure. One or more processors in the processing system may execute software, which may be referred to as software, firmware, middleware, microcode, hardware description language, or otherwise. Software shall be construed broadly to mean instructions, instruction sets, code, code segments, program code, programs, subprograms, software components, applications, software applications, software packages, routines, subroutines, objects, executables, threads of execution, procedures, functions, or any combination thereof.

If the functionality described herein is implemented in software, the functions may be stored on, or encoded as, one or more instructions or code on a computer-readable medium, such as a non-transitory computer-readable storage medium. Computer-readable media includes computer storage media and can include a random-access memory (RAM), a read-only memory (ROM), an electrically erasable programmable ROM (EEPROM), optical disk storage, magnetic disk storage, other magnetic storage devices, combinations of these types of computer-readable media, or any other medium that can be used to store computer executable code in the form of instructions or data structures that can be accessed by a computer. Storage media may be any available media that can be accessed by a computer.

Aspects, implementations, and/or use cases described herein may be implemented across many differing platform types, devices, systems, shapes, sizes, and packaging arrangements. For example, the aspects, implementations, and/or use cases may come about via integrated chip implementations and other non-module-component based devices, such as end-user devices, vehicles, communication devices, computing devices, industrial equipment, retail/purchasing devices, medical devices, artificial intelligence (AI)-enabled devices, machine learning (ML)-enabled devices, etc. The aspects, implementations, and/or use cases may range from chip-level or modular components to non-modular or non-chip-level implementations, and further to aggregate, distributed, or original equipment manufacturer (OEM) devices or systems incorporating one or more techniques described herein.

Devices incorporating the aspects and features described herein may also include additional components and features for the implementation and practice of the claimed and described aspects and features. For example, transmission and reception of wireless signals necessarily includes a number of components for analog and digital purposes, such as hardware components, antennas, RF-chains, power amplifiers, modulators, buffers, processor(s), interleavers, adders/summers, etc. Techniques described herein may be practiced in a wide variety of devices, chip-level components, systems, distributed arrangements, aggregated or disaggregated components, end-user devices, etc., of varying configurations.

The description herein is provided to enable a person skilled in the art to practice the various aspects described herein. Various modifications to these aspects will be readily apparent to those skilled in the art, and the generic principles defined herein may be applied to other aspects. Thus, the claims are not limited to the aspects described herein, but are to be interpreted in view of the full scope of the present disclosure consistent with the language of the claims.

Reference to an element in the singular does not mean "one and only one" unless specifically stated, but rather "one or more." Terms such as "if," "when," and "while" do not imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The terms "may", "might", and "can", as used in this disclosure, often carry certain connotations. For example, "may" refers to a permissible feature that may or may not occur, "might" refers to a feature that probably occurs, and "can" refers to a capability (e.g., capable of). The phrase "For example" often carries a similar connotation to "may" and, therefore, "may" is sometimes excluded from sentences that include "for example" or other similar phrases.

Unless specifically stated otherwise, the term "some" refers to one or more. Combinations such as "at least one of A, B, or C" or "one or more of A, B, or C" include any combination of A, B, and/or C, such as A and B, A and C, B and C, or A and B and C, and may include multiples of A, multiples of B, and/or multiples of C, or may include A only, B only, or C only. Sets should be interpreted as a set of elements where the elements number one or more. Terms or articles such as "a", "an", and/or "the" may refer to one of an item, feature, element, etc., that the term or article precedes, or may refer to more than one of said item, feature, element, etc. that the term or article precedes. For example, the recitation "a widget" does not preclude reference to multiples of said widget, as "multiple widgets" necessarily includes "a widget". Hence, the recitation "a widget" may be interpreted as "at least one widget" or, similarly, interpreted as "one or more widgets".

Unless otherwise specifically indicated, ordinal terms such as "first" and "second" do not necessarily imply an order in time, sequence, numerical value, etc., but are used to distinguish between different instances of a term or phrase that follows each ordinal term.

Reference numbers, as used in the specification and figures, are sometimes cross-referenced among drawings to denote same or similar features. A feature that is exactly the same in multiple drawings may be labeled with the same reference number in the multiple drawings. A feature that is similar among the multiple drawings, but not exactly the same, may be labeled with reference numbers that have different leading numbers but have one or more of the same trailing numbers (e.g., 206, 306, 406, etc., may refer to similar features in the drawings). Hence, like numbers may refer to like actions.

The words "module," "mechanism," "element," "device," and the like may not be a substitute for the word "means." As such, no claim element is to be construed as a means plus function unless the element is expressly recited using the phrase "means for." As used herein, the phrase "based on" shall not be construed as a reference to a closed set of information, one or more conditions, one or more factors, or the like. In other words, the phrase "based on A", where "A" may be information, a condition, a factor, or the like, shall be construed as "based at least on A" unless specifically recited differently.

## Claims

1. A method of wireless communication at a user equipment, UE, (102), comprising:

   receiving (206), from a network entity (104), a first control signaling indicating a life cycle management, LCM, configuration for at least one of a machine learning, ML, functionality or an ML model associated with a channel state information, CSI, report, the LCM configuration indicating an LCM metric;
   receiving (210), from the network entity (104), a second control signaling indicating at least one CSI reference signal, CSI-RS, resource for monitoring the LCM metric; and
   transmitting (214), to the network entity (104), an indication of a status change of the at least one of the ML functionality or the ML model associated with the CSI report, the indication being based on the at least one CSI-RS resource for monitoring the LCM metric.

2. The method of claim 1, wherein the LCM metric is based on at least one of: a throughput, a key performance indicator, KPI, a statistical distance, or a combination thereof.

3. The method of any of claims 1-2, further comprising:
   transmitting (202), to the network entity (104), a UE capability report indicating a UE capability for LCM based on at least one of the ML functionality or the ML model including at least one of:

   a supported use case for the at least one of the ML functionality or the ML model,
   a supported ML functionality identifier, ID, list,
   a supported ML model ID list,
   a supported ML model input type for the at least one of the ML functionality or the ML model, or
   the LCM metric.

4. The method of any of claims 1-3, wherein the LCM configuration further includes at least one of:

   a supported use case for the at least one of the ML functionality or the ML model,
   an ML functionality ID list,
   an ML model ID list, or
   an ML model input type for the at least one of the ML functionality or the ML model.

5. The method of any of claims 1-4, wherein the LCM configuration further includes at least one of:

   an in-sync indication threshold of the at least one of the ML functionality or the ML model;
   an out-of-sync indication threshold of the at least one of the ML functionality or the ML model;
   a first predetermined accumulated number of in-sync indications to determine a normal status of the at least one of the ML functionality or the ML mode; or
   a second predetermined accumulated number of out-of-sync indications to determine a failure status of the at least one of the ML functionality or the ML model.

6. The method of any of claims 1-5, further comprising monitoring the LCM metric at an interval based on at least one of:

   a configured monitoring interval;
   a discontinuous reception, DRX, cycle;
   a cell discontinuous transmission, DTX, cycle;
   a periodicity for a channel state information-reference signal, CSI-RS;
   a measurement gap repetition period; or
   a synchronization signal block measurement timing configuration, SMTC, periodicity.

7. The method of any of claims 1-6, further comprising monitoring the LCM metric during a time window based on at least one of:

   a configured monitoring window;
   a configured monitoring interval;
   a DRX cycle;
   a cell DTX cycle;
   a periodicity for the CSI-RS;
   a measurement gap repetition period; or
   a SMTC periodicity.

8. The method of any of claims 1-7, wherein the status change includes at least one of:

   a first status change from a normal status to a failure status; or
   a second status change from the failure status to the normal status.

9. The method of any of claims 1-8, further comprising:
   receiving (218), from the network entity (104), a third control signaling indicating a deactivation of the at least one of the ML functionality or the ML model based on the status change from a normal status to a failure status.

10. A method of wireless communication at a network entity (104), comprising:

    transmitting (206), to a user equipment, UE, (102), a first control signaling indicating a life cycle management, LCM, configuration for at least one of a machine learning, ML, functionality or an ML model associated with a channel state information, CSI, report, the LCM configuration indicating an LCM metric;
    transmitting (210), to the UE (102), a second control signaling indicating at least one CSI reference signal, CSI-RS, resource for monitoring the LCM metric; and
    receiving (214), from the UE (102), an indication of a status change of the at least one of the ML functionality or the ML model associated with the CSI report, the indication being based on the at least one CSI-RS resource for monitoring the LCM metric.

11. The method of claim 10, wherein the LCM configuration further includes at least one of:

    a supported use case for the at least one of the ML functionality or the ML model,
    an ML functionality ID list,
    an ML model ID list, or
    an ML model input type for the at least one of the ML functionality or the ML model.

12. The method of any of claims 10-11, wherein the configuration further includes at least one of:

    an in-sync indication threshold of the at least one of the ML functionality or the ML model;
    an out-of-sync indication threshold of the at least one of the ML functionality or the ML model;
    a first predetermined accumulated number of in-sync indications to determine a normal status of the at least one of the ML functionality or the ML mode; or
    a second predetermined accumulated number of out-of-sync indications to determine a failure status of the at least one of the ML functionality or the ML model.

**13.** The method of any of claims 10-12, wherein the status change includes at least one of:

>a first status change from a normal status to a failure status; or
>a second status change from the failure status to the normal status.

**14.** The method of any of claims 10-13, further comprising:
transmitting (210), to the UE (102), a third control signaling indicating a deactivation of the at least one of the ML functionality or the ML model based on the status change from a normal status to a failure status.

**15.** A user equipment, UE, comprising a transceiver, a memory, and a processor coupled to the memory and the transceiver, the UE being configured to implement a method as in any one of claims 1 - 9, or a network entity comprising a transceiver, a memory, and a processor coupled to the memory and the transceiver, the network entity being configured to implement a method as in any one of claims 10 - 14.

**Patentansprüche**

**1.** Verfahren zur drahtlosen Kommunikation an einer Benutzerausrüstung (user equipment, UE) (102), umfassend:

>Empfangen (206) eines ersten Steuersignals von einer Netzwerkentität (104), das eine Lebenszyklusverwaltungskonfiguration (life cycle management, LCM) für mindestens eine Maschinenlernfunktionalität (machine learning, ML) oder ein ML-Modell, das Kanalstatusinformationen (channel state information, CSI) zugeordnet ist, angibt, wobei die LCM-Konfiguration eine LCM-Metrik angibt;
>Empfangen (210), von der Netzwerkeinheit (104), eines zweiten Steuersignals, das mindestens eine CSI-Referenzsignal, CSI-RS, -Ressource zum Überwachen der LCM-Metrik anzeigt; und
>Übertragen (214) einer Angabe einer Statusänderung der mindestens einen der ML-Funktionalität oder des ML-Modells, die dem CSI-Bericht zugeordnet sind, an die Netzwerkentität (104), wobei die Angabe auf der mindestens einen CSI-RS-Ressource zum Überwachen der LCM-Metrik basiert.

**2.** Verfahren nach Anspruch 1, wobei die LCM-Metrik auf mindestens einem von Folgendem basiert: einem Durchsatz, einer Leistungskennzahl (key performance indicator, KPI), einem statistischen Abstand oder einer Kombination davon.

**3.** Verfahren nach einem der Ansprüche 1 bis 2, ferner umfassend: Übertragen (202) eines UE-Fähigkeitsberichts an die Netzwerkentität (104), der eine UE-Fähigkeit für LCM basierend auf mindestens einer der ML-Funktionalitäten oder dem ML-Modell angibt, das mindestens eines von Folgendem beinhaltet:

>einen unterstützten Anwendungsfall für die mindestens eine von der ML-Funktionalitäten oder dem ML-Modell,
>eine unterstützte ML-Funktionalitätskennungsliste (identifier, ID),
>eine unterstützte ML-Modell-ID-Liste,
>einen unterstützten ML-Modell-Eingabetyp für die mindestens eine von der ML-Funktionalität oder dem ML-Modell oder
>die LCM-Metrik.

**4.** Verfahren nach einem der Ansprüche 1 bis 3, wobei die LCM-Konfiguration ferner mindestens eines von Folgendem beinhaltet:

>einen unterstützten Anwendungsfall für die mindestens eine von der ML-Funktionalitäten oder dem ML-Modell,
>eine ML-Funktionalitäts-ID-Liste,
>eine ML-Modell-ID-Liste oder
>einen ML-Modell-Eingabetyp für die mindestens eine von der ML-Funktionalität oder dem ML-Modell.

**5.** Verfahren nach einem der Ansprüche 1-4, wobei die LCM-Konfiguration ferner mindestens eines von Folgendem beinhaltet:

>einen In-Sync-Angabe-Schwellenwert der mindestens einen von der ML-Funktionalität oder dem ML-Modell;
>einen Out-of-Sync-Angabe-Schwellenwert der mindestens einen von der ML-Funktionalität oder dem ML-Modell;

eine erste vorbestimmte akkumulierte Anzahl von In-Sync-Angaben, um einen normalen Status der mindestens einen von der ML-Funktionalität oder dem ML-Modus zu bestimmen; oder

eine zweite vorbestimmte akkumulierte Anzahl von Out-of-Sync-Angaben, um einen Fehlerstatus der mindestens einen von der ML-Funktionalität oder dem ML-Modell zu bestimmen.

6. Verfahren nach einem der Ansprüche 1-5, ferner umfassend Überwachen der LCM-Metrik in einem Intervall, basierend auf mindestens einem von Folgendem:

einem konfigurierten Überwachungsintervall;

einem diskontinuierlichen Empfangszyklus (discontinuous reception, DRX);

einem diskontinuierlichen Zellübertragungszyklus (discontinuous transmission, DTX);

einer Periodizität für ein Kanalstatus-Informations-Referenzsignal (channel state information-reference signal, CSI-RS);

einer Messlücken-Wiederholungsperiode; oder

einer Synchronisationssignalblock-Messzeitkonfigurationsperiodizität (signal block measurement timing configuration, SMTC).

7. Verfahren nach einem der Ansprüche 1-6, ferner umfassend Überwachen der LCM-Metrik während eines Zeitfensters, basierend auf mindestens einem von Folgendem:

einem konfigurierten Überwachungsfenster;

einem konfigurierten Überwachungsintervall;

einem DRX-Zyklus;

einem Zell-DTX-Zyklus;

einer Periodizität für das CSI-RS;

einer Messlücken-Wiederholungsperiode; oder

einer SMTC-Periodizität.

8. Verfahren nach einem der Ansprüche 1-7, wobei die Statusänderung mindestens eines von Folgendem beinhaltet:

eine erste Statusänderung von einem normalen Status zu einem Fehlerstatus; oder

eine zweite Statusänderung von dem Fehlerstatus zu dem normalen Status.

9. Verfahren nach einem der Ansprüche 1-8, ferner umfassend:
Empfangen (218) eines dritten Steuersignals von der Netzwerkentität (104), das eine Deaktivierung der mindestens einen von der ML-Funktionalität oder dem ML-Modell basierend auf der Statusänderung von einem normalen Status zu einem Fehlerstatus angibt.

10. Verfahren zur drahtlosen Kommunikation in einer Netzwerkentität (104), umfassend:

Übertragen (206) eines ersten Steuersignals an eine Benutzerausrüstung, UE, (102), das eine Lebenszyklusverwaltungskonfiguration, LCM, für mindestens eine von einer Maschinenlernfunktionalität, ML, oder einem ML-Modell, das Kanalstatusinformationen, CSI, zugeordnet ist, angibt, wobei die LCM-Konfiguration eine LCM-Metrik angibt;

Übertragen (210) eines zweiten Steuersignals an die UE (102), das mindestens eine CSI-Referenzsignal, CSI-RS, -Ressource zum Überwachen der LCM-Metrik anzeigt; und

Empfangen (214) einer Angabe einer Statusänderung der mindestens einen von der ML-Funktionalität oder dem ML-Modell, die dem CSI-Bericht zugeordnet sind, von der UE (102), wobei die Angabe auf der mindestens einen CSI-RS-Ressource zum Überwachen der LCM-Metrik basiert.

11. Verfahren nach Anspruch 10, wobei die LCM-Konfiguration ferner mindestens eines von Folgendem beinhaltet:

einen unterstützten Anwendungsfall für die mindestens eine von der ML-Funktionalitäten oder dem ML-Modell, eine ML-Funktionalitäts-ID-Liste,

eine ML-Modell-ID-Liste oder

einen ML-Modell-Eingabetyp für die mindestens eine von der ML-Funktionalität oder dem ML-Modell.

12. Verfahren nach einem der Ansprüche 10-11, wobei die Konfiguration ferner mindestens eines von Folgendem beinhaltet:

einen In-Sync-Angabe-Schwellenwert der mindestens einen von der ML-Funktionalität oder dem ML-Modell;
einen Out-of-Sync-Angabe-Schwellenwert der mindestens einen von der ML-Funktionalität oder dem ML-Modell;
eine erste vorbestimmte akkumulierte Anzahl von In-Sync-Angaben, um einen normalen Status der mindestens einen von der ML-Funktionalität oder dem ML-Modus zu bestimmen; oder
eine zweite vorbestimmte akkumulierte Anzahl von Out-of-Sync-Angaben, um einen Fehlerstatus der mindestens einen von der ML-Funktionalität oder dem ML-Modell zu bestimmen.

**13.** Verfahren nach einem der Ansprüche 10-12, wobei die Statusänderung mindestens eines von Folgendem beinhaltet:

eine erste Statusänderung von einem normalen Status zu einem Fehlerstatus; oder
eine zweite Statusänderung von dem Fehlerstatus zu dem normalen Status.

**14.** Verfahren nach einem der Ansprüche 10-13, ferner umfassend: Übertragen (210) eines dritten Steuersignals an die UE (102), das eine Deaktivierung der mindestens einen von der ML-Funktionalität oder dem ML-Modell basierend auf der Statusänderung von einem normalen Status zu einem Fehlerstatus angibt.

**15.** Benutzerausrüstung, UE, die einen Sender-/Empfänger, einen Speicher und einen mit dem Speicher und dem Sender-/Empfänger gekoppelten Prozessor umfasst, wobei die UE dazu konfiguriert ist, ein Verfahren nach einem der Ansprüche 1-9 durchzuführen, oder eine Netzwerkentität, die einen Sender-/Empfänger, einen Speicher und einen mit dem Speicher und dem Sender-/Empfänger gekoppelten Prozessor umfasst, wobei die Netzwerkentität dazu konfiguriert ist, ein Verfahren nach einem der Ansprüche 10-14 durchzuführen.


**Revendications**

**1.** Procédé de communication sans fil au niveau d'un équipement utilisateur, UE (102), comprenant :

la réception (206), en provenance d'une entité de réseau (104), d'une première signalisation de commande indiquant une configuration de gestion de cycle de vie, LCM, pour au moins l'une d'une fonctionnalité d'apprentissage automatique, ML, ou d'un modèle ML associé à un rapport d'informations d'état de canal, CSI, la configuration LCM indiquant une métrique LCM ;
la réception (210), en provenance de l'entité de réseau (104), d'une deuxième signalisation de commande indiquant au moins une ressource de signal de référence CSI, CSI-RS, pour la surveillance de la métrique LCM ; et
la transmission (214), à l'entité de réseau (104), d'une indication d'un changement d'état de l'au moins l'une de la fonctionnalité ML ou du modèle ML associé au rapport CSI, l'indication étant basée sur l'au moins une ressource CSI-RS pour la surveillance de la métrique LCM.

**2.** Procédé selon la revendication 1, dans lequel la métrique LCM est basée sur au moins l'un des éléments suivants : un débit, un indicateur clé de performance, KPI, une distance statistique ou une combinaison de ceux-ci.

**3.** Procédé selon l'une quelconque des revendications 1 et 2, comprenant également :
la transmission (202), à l'entité de réseau (104), d'un rapport de capacité UE indiquant une capacité UE pour la LCM sur la base d'au moins l'une de la fonctionnalité ML ou du modèle ML comportant au moins l'un des éléments suivants :

un cas d'utilisation pris en charge pour l'au moins l'une de la fonctionnalité ML ou du modèle ML,
une liste d'identifiants, ID, de fonctionnalité ML pris en charge,
une liste d'identifiants de modèles ML pris en charge,
un type d'entrée de modèle ML pris en charge pour l'au moins l'une de la fonctionnalité ML ou du modèle ML, ou
la métrique LCM.

**4.** Procédé selon l'une quelconque des revendications 1 à 3, dans lequel la configuration LCM comporte également au moins l'un des éléments suivants :

un cas d'utilisation pris en charge pour l'au moins l'une de la fonctionnalité ML ou du modèle ML,

une liste d'identifiants de fonctionnalité ML,
une liste d'identifiants de modèle ML, ou
un type d'entrée de modèle ML pour l'au moins l'une de la fonctionnalité ML ou du modèle ML.

5. Procédé selon l'une quelconque des revendications 1 à 4, dans lequel la configuration LCM comporte également au moins l'un des éléments suivants :

un seuil d'indication synchronisée de l'au moins l'une de la fonctionnalité ML ou du modèle ML ;
un seuil d'indication non synchronisée de l'au moins l'une de la fonctionnalité ML ou du modèle ML ;
un premier nombre cumulé prédéterminé d'indications synchronisées pour déterminer un état normal de l'au moins l'une de la fonctionnalité ML ou du modèle ML ; ou
un second nombre cumulé prédéterminé d'indications non synchronisées pour déterminer un état de défaillance de l'au moins l'une de la fonctionnalité ML ou du modèle ML.

6. Procédé selon l'une quelconque des revendications 1 à 5, comprenant également la surveillance de la métrique LCM à un intervalle sur la base d'au moins l'un des éléments suivants :

un intervalle de surveillance configuré ;
un cycle de réception discontinue, DRX ;
un cycle de transmission discontinue, DTX, cellulaire ;
une périodicité pour un signal de référence d'informations d'état de canal, CSI-RS ;
une période de répétition d'écart de mesure ; ou
une périodicité de configuration de synchronisation de mesure de bloc de signal de synchronisation, SMTC.

7. Procédé selon l'une quelconque des revendications 1 à 6, comprenant également la surveillance de la métrique LCM pendant une fenêtre temporelle sur la base d'au moins l'un des éléments suivants :

une fenêtre de surveillance configurée ;
un intervalle de surveillance configuré ;
un cycle DRX ;
un cycle DTX cellulaire ;
une périodicité pour le CSI-RS ;
une période de répétition d'écart de mesure ; ou
une périodicité SMTC.

8. Procédé selon l'une quelconque des revendications 1 à 7, dans lequel le changement d'état comporte au moins l'un des éléments suivants :

un premier changement d'état, d'un état normal à un état de défaillance ; ou
un second changement d'état, de l'état de défaillance à l'état normal.

9. Procédé selon l'une quelconque des revendications 1 à 8, comprenant également :
la réception (218), en provenance de l'entité de réseau (104), d'une troisième signalisation de commande indiquant une désactivation de l'au moins l'une de la fonctionnalité ML ou du modèle ML sur la base du changement d'état d'un état normal à un état de défaillance.

10. Procédé de communication sans fil au niveau d'une entité de réseau (104), comprenant :

la transmission (206), à un équipement utilisateur, UE (102), d'une première signalisation de commande indiquant une configuration de gestion de cycle de vie, LCM, pour au moins l'une d'une fonctionnalité d'apprentissage automatique, ML, ou d'un modèle ML associé à un rapport d'informations d'état de canal, CSI, la configuration LCM indiquant une métrique LCM ;
la transmission (210), à l'UE (102), d'une deuxième signalisation de commande indiquant au moins une ressource de signal de référence CSI, CSI-RS, pour la surveillance de la métrique LCM ; et
la réception (214), en provenance de l'UE (102), d'une indication d'un changement d'état de l'au moins l'une de la fonctionnalité ML ou du modèle ML associé au rapport CSI, l'indication étant basée sur l'au moins une ressource CSI-RS pour la surveillance de la métrique LCM.

**11.** Procédé selon la revendication 10, dans lequel la configuration LCM comporte également au moins l'un des éléments suivants :

un cas d'utilisation pris en charge pour l'au moins l'une de la fonctionnalité ML ou du modèle ML,
une liste d'identifiants de fonctionnalité ML,
une liste d'identifiants de modèle ML, ou
un type d'entrée de modèle ML pour l'au moins l'une de la fonctionnalité ML ou du modèle ML.

**12.** Procédé selon l'une quelconque des revendications 10 et 11, dans lequel la configuration comporte également au moins l'un des éléments suivants :

un seuil d'indication synchronisée de l'au moins l'une de la fonctionnalité ML ou du modèle ML ;
un seuil d'indication non synchronisée de l'au moins l'une de la fonctionnalité ML ou du modèle ML ;
un premier nombre cumulé prédéterminé d'indications synchronisées pour déterminer un état normal de l'au moins l'une de la fonctionnalité ML ou du modèle ML ; ou
un second nombre cumulé prédéterminé d'indications non synchronisées pour déterminer un état de défaillance de l'au moins l'une de la fonctionnalité ML ou du modèle ML.

**13.** Procédé selon l'une quelconque des revendications 10 à 12, dans lequel le changement d'état comporte au moins l'un des éléments suivants :

un premier changement d'état, d'un état normal à un état de défaillance ; ou
un second changement d'état, de l'état de défaillance à l'état normal.

**14.** Procédé selon l'une quelconque des revendications 10 à 13, comprenant également :
la transmission (210), à l'UE (102), d'une troisième signalisation de commande indiquant une désactivation de l'au moins l'une de la fonctionnalité ML ou du modèle ML sur la base du changement d'état d'un état normal à un état de défaillance.

**15.** Équipement utilisateur, UE, comprenant un émetteur-récepteur, une mémoire et un processeur couplé à la mémoire et à l'émetteur-récepteur, l'UE étant configuré pour mettre en œuvre un procédé selon l'une quelconque des revendications 1 à 9, ou une entité de réseau comprenant un émetteur-récepteur, une mémoire et un processeur couplé à la mémoire et à l'émetteur-récepteur, l'entité de réseau étant configurée pour mettre en œuvre un procédé selon l'une quelconque des revendications 10 à 14.

FIG. 1

EP 4 578 216 B1

**200**

200

| UE 102 | | Network Entity 104 |

UE capability on ML based LCM for CSI enhancement)

202 - - - - - - - - - - - - - - - - - - - - - - - - - - - - - - - - - →

ML functionality based/model ID based LCM configuration for CSI enhancement

206 ←─────────────────────────────────

ML functionality/model activation for CSI enhancement

208 ←─ ─ ─ ─ ─ ─ ─ ─ ─ ─ ─ ─ ─ ─ ─ ─ ─ ─

Configures CSI-RS(s) and/or DL-MIMO transmission

210 ←─────────────────────────────────

| ML functionality/model ID based model monitoring by the configured LCM metric | 212 |

Indication of a status change of ML functionality/model for CSI enhancement

214 ─────────────────────────────────→

| | Determine ML functionality/model de-activation/switching /fallback for CSI enhancement | 216 |

ML functionality/model de-activation/switching/fallback for CSI enhancement

218 ←─ ─ ─ ─ ─ ─ ─ ─ ─ ─ ─ ─ ─ ─ ─ ─ ─ ─

| ML functionality based/model ID based model monitoring by the configured LCM metric | 212 |

ML functionality/model activation request for CSI enhancement

220 ─────────────────────────────────→

ML functionality/model activation for CSI enhancement

208 ←─────────────────────────────────

# FIG. 2

**FIG. 3**

EP 4 578 216 B1

**400**

**412-2**

Determine an initial value for Nout_LCM_acc is zero, and an initial value for Nin_LCM_acc is zero

**412-4**

Activate the timer of T_window, when detecting the LCM metric is less than or equal to *Qout_LCM*

**412-6**

Is the T_window expired?

No

**412-8**

Is Nout_LCM_acc >= a predetermined number threshold for out-of-sync indication?

Yes

**412-10**

Is Nin_LCM_acc >= a predetermined number threshold for in-sync indication?

No

Yes

**412-14**

a status change from a normal status to a failure status

**412-12**

a normal status

**414**

Send an indication of the status change from the normal status to the failure status

# FIG. 4

**500**

**412-2**

Determine an initial value for Nout_LCM_acc is zero, and an initial value for Nin_LCM_acc is zero

**412-4**

Activate the timer of T_window, when detecting the LCM metric is less than or equal to *Qout_LCM*

**412-6**

Is the T_window expired?

No          Yes

**512-18**

Is the Nin_LCM_acc = a predetermined number threshold for in-sync indication?

**412-8**

Is Nout_LCM_acc >= a predetermined number threshold for out-of-sync indication?

**512-20**

Is Nout_LCM_acc < a predetermined number threshold for out-of-sync indication?

Yes

**412-10**

Is Nin_LCM_acc >= a predetermined number threshold for in-sync indication?

Yes          Yes          Yes

**512-12**

a status change from a failure status to a normal status

**514**

Send an indication of the status change from a failure status to the normal status

# FIG. 5

**600**

**602**

Transmit, to the network entity, a UE capability report indicating a UE capability for the LCM based on at least one of an ML functionality or an ML model

**606**

Receive, from a network entity, a first control signaling indicating an LCM configuration for at least one of the ML functionality or the ML model associated with a CSI report, the LCM configuration indicating an LCM metric

**610**

Receive, from the network entity, a second control signal indicating a CSI-RS resource for monitoring the LCM

**614**

Transmit, to the network entity, an indication of a status change of the at least one of the ML functionality or the ML model associated with the CSI report, the indication being based on the CSI-RS resource for monitoring the LCM metric

**618**

Receive, from the network entity, a third control signaling indicating a deactivation of the at least one of the ML functionality or the ML model based on the status change from a normal status to a failure status

**FIG. 6**

EP 4 578 216 B1

**700**

**702**

Receive, from a UE, a UE capability report indicating a UE capability for the LCM based on at least one of an ML functionality or an ML model

**706**

Transmit, to the UE, a first control signaling indicating an LCM configuration for at least one of the ML functionality or the ML model associated with a CSI report, the LCM configuration indicating an LCM metric

**710**

Transmit, to the UE, a second control signal indicating a CSI-RS resource for monitoring the LCM

**714**

Receive, from the UE, an indication of a status change of the at least one of the ML functionality or the ML model associated with the CSI report, the indication being based on the CSI-RS resource for monitoring the LCM metric

**718**

Transmit, to the UE, a third control signaling indicating a deactivation of the at least one of the ML functionality or the ML model based on the status change from a normal status to a failure status

**FIG. 7**

EP 4 578 216 B1

**FIG. 8**

EP 4 578 216 B1

900

104

**RU** **106**

Communications Interface
**908**

160

Fronthaul
Link

**DU** **108**

Communications Interface
**928**

162

Midhaul
Link

**CU** **110**

Communications Interface
**948**

RU Processor
**906**

906'

Memory

Configuration
Component
**150a**

DU Processor
**926**

926'

Memory

Configuration
Component
**150b**

CU Processor
**946**

946'

Memory

Configuration
Component
**150c**

Memory
**916**

Memory
**936**

Memory
**956**

Transceiver(s)
**930**

Antennas
**940**

102

**FIG. 9**

EP 4 578 216 B1

**REFERENCES CITED IN THE DESCRIPTION**

**Patent documents cited in the description**

- WO 2023187687 A